# EUROPÄISCHE PATENTANMELDUNG

(11) **EP 2 913 573 A1**
(43) Veröffentlichungstag der Anmeldung: **02.09.2015**
(21) Anmeldenummer: 14156772.7
(22) Anmeldetag: 26.02.2014
(51) Int. Cl.: F16K 51/02

(54) **Vakuumventil**

(71) Anmelder: VAT Holding AG, 9469 Haag (CH)
(72) Erfinder: Wagner, Cedric, FL-9488 Schellenberg (LI); Summer, Karlheinz, A-6700 Bludenz (AT); Frehner, Hanspeter, CH-9479 Sevelen (CH); Zickar, Michael, CH-9032 Englburg (CH)
(74) Vertreter: Allwardt, Anke

(57) **Zusammenfassung**

Vakuumventil (1) mit einem Schraubelement (9a; 9b) zur mechanisch koppelnden Verbindung eines ersten Bauteils (10) des Vakuumventils (1) mit einem zweiten Bauteil (11). Das Schraubelement (9a; 9b) hat einen Kraftübertragungs-Oberflächenabschnitt (18) zwischen einem Gewinde-Oberflächenabschnitt (12) mit einem ersten Gewinde (14a; 14b) und einem in einem ersten Gasbereich (5) angeordneten Eingriffs-Oberflächenabschnitt (15) für ein Werkzeug (17). Das erste Bauteil (10) und das zweite Bauteil (11) sind durch einen durch ein Durchgangsloch (20) des ersten Bauteils (11) erfolgenden Gewindeeingriff zwischen dem ersten Gewinde (14a; 14b) und einem dem zweiten Bauteil (11) zugeordneten zweiten Gewinde (21a; 21b) formschlüssig mechanisch koppelbar. Das Schraubelement (9a; 9b) hat einen Dichtungs-Oberflächenabschnitt (24) zwischen dem Gewinde-Oberflächenabschnitt (12) und dem Eingriffs-Oberflächenabschnitt (15). Zwischen dem Dichtungs-Oberflächenabschnitt (24) und einer Dichtungsfläche (25) des ersten Bauteils (10) ist ein dichtendes Dichtungselement (26a; 26b) derart angeordnet, dass der erste Gasbereich (5) von einem dritten Gasbereich (27), in dem der Gewinde-Oberflächenabschnitt (12) angeordnet ist, gas- oder partikeldichtend getrennt ist.

## Beschreibung

Die Erfindung betrifft ein Vakuumventil nach dem Oberbegriff des Anspruchs 1 und ein Schraubelement für ein Vakuumventil nach dem Oberbegriff des Anspruchs 19.

Allgemein sind Vakuumventile zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt.

Vakuumschieberventile kommen insbesondere im Bereich der IC- und Halbleiterfertigung, die in einer geschützten Atmosphäre möglichst ohne das Vorhandensein verunreinigender Mikropartikel stattfinden muss, zum Einsatz. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transports von Prozesskammer zu Prozesskammer müssen sich die hochsensiblen Halbleiterelemente stets in geschützter Atmosphäre - insbesondere im Vakuum - befinden.

Die Prozesskammern sind beispielsweise über Verbindungsgänge miteinander verbunden, wobei die Prozesskammern mittels Vakuumschieberventile zum Transfer der Teile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres rechteckigen Öffnungsquerschnitts auch als Rechteckschieber bezeichnet.

Da Transferventile unter anderem bei der Herstellung hochsensibler Halbleiterelemente zum Einsatz kommen, muss die insbesondere durch die Betätigung des Ventils und durch die mechanische Belastung des Ventilverschlussgliedes verursachte Partikelgenerierung und die Anzahl der freien Partikel im Ventilraum möglichst gering gehalten werden. Die Partikelgenerierung ist primär eine Folge von Reibung beispielsweise durch Metall-Metall-Kontakt und durch Abrasion.

Abhängig von den jeweiligen Antriebstechnologien wird insbesondere zwischen Schieberventilen, auch Ventilschieber oder Rechteckschieber genannt, und Pendelventilen unterschieden, wobei das Schliessen und Öffnen im Stand der Technik meistens in zwei Schritten erfolgt. In einem ersten Schritt wird ein Ventilverschlussglied, insbesondere ein Verschlussteller, im Falle eines Schieberventils, wie beispielsweise aus der US 6,416,037 (Geiser) oder der US 6,056,266 (Blecha) bekannt, insbesondere des L-Typs, linear über eine Öffnung im Wesentlichen parallel zum Ventilsitz verschoben oder im Falle eines Pendelventils, wie beispielsweise aus der US 6,089,537 (Olmsted) bekannt, um eine Schwenkachse über die Öffnung geschwenkt, ohne dass hierbei eine Berührung zwischen dem Verschlussteller und dem Ventilsitz des Ventilgehäuses stattfindet. In einem zweiten Schritt wird der Verschlussteller mit dessen Verschlussseite auf den Ventilsitz des Ventilgehäuses gedrückt, so dass die Öffnung gasdicht verschlossen wird. Die Abdichtung kann z.B. entweder über eine auf der Verschlussseite des Verschlusstellers angeordnete Dichtung, die auf den die Öffnung umlaufenden Ventilsitz gepresst wird, erfolgen, oder über einen Dichtungsring auf dem Ventilsitz, gegen den die Verschlussseite des Verschlusstellers gedrückt wird. Die Dichtung insbesondere der Dichtungsring, kann in einer Nut gehalten und/oder aufvulkanisiert sein.

Unterschiedliche Dichtvorrichtungen sind aus dem Stand der Technik bekannt, beispielsweise aus der US 6,629,682 B2 (Duelli). Ein geeignetes Material für Dichtungsringe und Dichtungen bei Vakuumventilen ist beispielsweise Fluorkautschuk, auch FKM genannt, insbesondere das unter dem Handelsnamen Viton® bekannte Fluorelastomer, sowie Perfluorkautschuk, kurz FFKM.

Die beschriebene zweistufige Bewegung, bei welcher das Verschlussglied zuerst quer über die Öffnung geschoben wird, ohne dass es zu einer Berügung der Dichtung mit dem Ventilsitz kommt, und das Verschlussglied im Anschluss im Wesentlichen senkrecht auf den Ventilsitz gedrückt wird, hat neben der Möglichkeit einer präzisen Regelung des Durchflusses vor allem den Vorteil, dass die Dichtung nahezu ausschliesslich senkrecht verpresst wird, ohne dass es zu einer Quer- oder Längsbelastung der Dichtung kommt. Hierfür kommt entweder ein einziger Antrieb, der eine L-förmige Bewegung des Verschlussglieds ermöglicht, oder eine Mehrzahl an Antrieben, beispielsweise zwei Linearantrieben oder einem Linear- und einem Spreizantrieb, zum Einsatz.

Ausserdem sind Schieberventile bekannt, bei welchen der Schliess- und Dichtvorgang zwar über eine einzige lineare Bewegung erfolgt, jedoch die Dichtgeometrie derart ist, dass eine Querbeanspruchung der Dichtung gänzlich vermieden wird. Ein solches Ventil ist beispielsweise das unter der Produktbezeichnung "MONOVAT Reihe 02 und 03" bekannte und als Rechteckinsertventil ausgestaltete Transferventil der Firma VAT Vakuumventile AG in Haag, Schweiz. Der Aufbau und die Funktionsweise eines solchen Ventils werden beispielsweise in der US 4,809,950 (Geiser) und der US 4,881,717 (Geiser) beschrieben.

Das dort beschriebene Ventil besitzt in seinem Gehäuse eine Dichtfläche, die, in Richtung der Achse der Ventildurchgangsöffnung gesehen, hintereinander liegende Abschnitte besitzt, die in seitlich nach aussen verlaufende, ebene Dichtflächenabschnitte über stetig verlaufende Krümmungen übergehen, wobei die gedachten Erzeugenden dieser einteiligen, aber mehrere Abschnitte aufweisenden Dichtfläche parallel zur Achse der Ventildurchgangsöffnung liegen.

Ein geeigneter Antrieb für ein solches, mittels einer linearen Bewegung verschliessbares Transferventil ist in der JP 6241344 (Buriida Fuuberuto) dargestellt. Der dort beschriebene Antrieb besitzt exzentrisch gelagerte Hebel zum linearen Verschieben der Schubstangen, auf welchen das Verschlussglied montiert ist.

In einer verbreiteten Ausführungsform der oben genannten Ventiltypen sind das Verschlussglied und der Ventilantrieb über mindestens einen Verstellarm, insbesondere eine Schubstange oder Ventilstange, verbunden. Hierbei ist der starre Verstellarm mit seinem einen Ende starr mit dem Verschlussglied und mit seinem anderen Ende starr mit dem Ventilantrieb verbunden. Der Verschlussteller ist bei den meisten Ventilen mittels Verschraubung mit der mindestens einen Schubstange verbunden.

In der CH 699 258 B1 wird ein Vakuumventil mit einem Verschlussteller beschrieben, in welchem mindestens eine Stangenaufnahme ausgeformt ist, und mindestens einer Schubstange, an welcher der Verschlussteller über einen in die Stangenaufnahme eingreifenden Verbindungsabschnitt der Schubstange abnehmbar montiert ist. Die Stangenaufnahme ist als ein Sackloch ausgebildet, in welches die Schubstange mit ihrem Verbindungsabschnitt eingeführt ist. Der Verschlussteller weist ein in das Sackloch verstellbar hineinragendes und derart ausgebildetes Klemmelement auf, dass eine durch das Verstellen des Klemmelements lösbare Klemmverbindung zwischen dem Verschlussteller und dem Verbindungsabschnitt besteht. Ein partikeldichtender Dichtring ist zwischen dem Sackloch und der Schubstange derart angeordnet, dass durch die Klemmverbindung erzeugte Partikel am Austreten aus dem Sackloch gehindert werden, wodurch die Anzahl ungewollter, durch Materialreibung verursachter Partikel im Ventilraum gering gehalten und eine schnelle und komfortable Montierbarkeit und Demontierbarkeit des Verschlusstellers auf der mindestens einen Schubstange ermöglicht wird.

In der DE 10 2008 061 315 B4 wird eine Aufhängung einer Ventilplatte an einer Ventilstange mittels einem quer zur Ventilstange sich erstreckenden Querträger beschrieben. Der Querträger ist an einer mittleren Verbindungsstelle mit der Ventilstange insbesondere durch eine Schraube verbunden und an mindestens zwei beidseitig zu der mittleren Verbindungsstelle liegenden seitlichen Verbindungsstellen mit der Ventilplatte, insbesondere mittels Verschraubung, verbunden. Der Querträger weist in einem mittleren Abschnitt, der die mittlere Verbindungsstelle und beidseitig an diese anschließende Abschnitte des Querträgers umfasst, einen Abstand von der Ventilplatte auf. Mittels dieser einfach ausgebildeten Aufhängung wird eine gewisse Verschwenkung, beispielsweise im Bereich von 1°, der Ventilplatte gegenüber der Ventilstange um eine rechtwinkelig zur Ventilstange stehende Schwenkachse durch eine Verwindung des Querträgers ermöglicht. Es kann dadurch eine sehr einfache Ausbildung erreicht werden. Der Querträger kann vorzugsweise materialeinstückig und insbesondere vollständig aus Metall ausgebildet sein.

In der US 6 471 181 B2 wird eine ähnliche Aufhängung beschrieben. Ein mit der Ventilstange zu verbindender Querträger umfasst eine erste Platte, die eine konische Öffnung zur Aufnahme des Endes der Ventilstange aufweist, die mit der ersten Platte verschraubt wird. Beidseitig zu der mittleren Verbindungsstelle mit der Ventilstange sind an der ersten Platte elastische Lagerblöcke angebracht, an deren der ersten Platte gegenüberliegenden Seiten zweite Platten angebracht sind, welche jeweils mit der Ventilplatte verschraubt werden. Mittels dieser elastischen Lagerblöcke wird eine Verkippung um eine rechtwinkelig zur Ventilstange stehende Achse ermöglicht, sodass eine gleichmäßigere Anpressung der Dichtung der Ventilplatte am Ventilsitz erreicht wird.

In der US 2008/0066811 A1 wird ein Vakuumventil beschrieben, bei welchem eine Ventilplatte mit ersten und zweiten Querträgern verbunden ist. Die Querträger sind mit der Ventilplatte über Verbindungsglieder verbunden. Diese weisen von einer Verbindungsstelle mit dem Querträger beidseitig in Längsrichtung des Querträgers sich erstreckende Verbindungsarme auf, die endseitig mit einem gemeinsamen in Längsrichtung des Querträgers sich erstreckenden Verbindungsschenkel verbunden sind, welcher an mehreren in Längsrichtung des Querträgers beabstandeten Stellen an der Ventilplatte angeschraubt ist. Hierdurch soll eine gleichmäßigere Kraftübertragung in Längsrichtung der Querträger erreicht werden.

Gemein ist diesen Ausführungsformen, dass ein innerhalb des Vakuumbereichs des Vakuumventils befindliches Verschlussglied mittels mindestens einer ebenfalls innerhalb dieses Vakuumbereichs angeordneten Verschraubung unmittelbar oder insbesondere über einen Querträger mittelbar mit einem Verstellarm des Ventilantriebs verbunden ist.

Schraubverbindungen innerhalb eines Vakuumbereichs bergen die Gefahr eines so genannten virtuellen inneren Vakuumlecks, da gewissen Teile des Gewindes der Verschraubung beim Evakuieren des Ventilinnenraums mehr oder weniger luftdicht von der restlichen Umgebung abgeschlossen sind und somit das teilweise im Gewinde verbliebene Gas nach dem Evakuieren langsam entweicht und den Ventilinnenraum kontaminiert. Aus diesem Grunde werden im Stand der Technik in die Gewindeabschnitte führende Verbindungskanäle und -schlitze geschaffen, wodurch die Gewinde belüftet werden. Somit kann beim Evakuieren kein Gas im Gewinde verbleiben.

In anderen Worten werden bei Vakuumventilen bewusst Maßnahmen getroffen, um allfällig innerhalb des Vakuumbereichs eines Vakuumventils befindliche inneren Gasbereiche, die von dem Vakuumbereich umschlossen sind, zu vermeiden, indem diese inneren Gasbereiche insbesondere mittels Belüftungsbohrungen belüftet und somit mit dem Vakuumbereich verbunden werden. Im Falle von Schraubverbindungen erfolgt dies mittels der beschriebenen Verbindungskanäle oder -schlitze.

Diese bewusste Gewindebelüftung ist bei Schraubverbindungen innerhalb eines Vakuumbereichs bei Vakuumventilen bekannt und findet bei auf den Markt befindlichen Ventiltypen bereits Anwendung.

Es hat sich jedoch herausgestellt, dass diese zur Vermeidung virtueller innerer Vakuumlecks bewusst geschaffene Gewindebelüftung vor allem bei gewollten oder ungewollten, minimalen Relativbewegungen zwischen den mittels der Verschraubung verbundenen Teile von gewissen Nachteil sein kann, da innerhalb des Gewindes kleine Reibpartikel in Form von Mikropartikeln entstehen, welche durch die Belüftungskanäle oder -schlitze entweichen und das Ventilinnere verunreinigen. Dies ist vor allem bei Metallgewinden der Fall. Hierdurch kommt es zu einer negativen Beeinfussung des Fertigungsprozesses. Bei üblichen Schraubverbindungen im Vakuumbereich ist die Relativbewegung der Gewindeteile jedoch derart gering, dass bisher eine Partikelerzeugung als vernachlässigbar betrachtet wurde.

Bei gewissen Verbindungsarten ist eine Relativbewegung im Gewinde jedoch unvermeidbar. Eine solche Relativbewegung im Gewinde und einer daraus resultierenden Partikelerzeugung kann insbesondere bei dem oben beschriebenen, in der DE 10 2008 061 315 B4 offenbarten Ventiltyp entstehen, da es bei diesem Ventil bewusst zu einer elastischen Verformung des Querträgers zur Ermöglichung einer Schwenkbewegung um die gedachte Schwenkachse kommt.

Generell bergen Schraubverbindungen innerhalb eines Vakuumbereichs eines Vakuumventils die Gefahr der Erzeugung ungewollter, prozessschädigender Reibpartikel in Form von Mikropartikeln, die durch eine Relativbewegung zwischen den Gewinden entstehen.

Es ist daher Aufgabe der Erfindung, ein Vakuumventil mit einem Schraubelement im Vakuumbereich zur mechanisch koppelnden Verbindung eines ersten Bauteils des Vakuumventils mit einem zweiten Bauteil sowie ein hierfür geeignetes Schraubelement zur Verfügung zu stellen, mittels welchem die Anzahl von durch Materialreibung im Gewinde der Schraubverbindung erzeugten Reibpartikel innerhalb des Vakuumbereichs gering gehalten wird.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Zusammengefasst umfasst die Erfindung ein Vakuumventil mit einem Schraubelement zur mechanisch koppelnden Verbindung eines ersten Bauteils des Vakuumventils mit einem zweiten Bauteil. Das Schraubelement hat einen Kraftübertragungs-Oberflächenabschnitt zwischen einem Gewinde-Oberflächenabschnitt mit einem ersten Gewinde und einem in einem ersten Gasbereich angeordneten Eingriffs-Oberflächenabschnitt für ein Werkzeug. Das erste Bauteil und das zweite Bauteil sind durch einen durch ein Durchgangsloch des ersten Bauteils erfolgenden Gewindeeingriff zwischen dem ersten Gewinde und einem dem zweiten Bauteil zugeordneten zweiten Gewinde formschlüssig mechanisch koppelbar. Das Schraubelement hat einen Dichtungs-Oberflächenabschnitt zwischen dem Gewinde-Oberflächenabschnitt und dem Eingriffs-Oberflächenabschnitt.

Erfindungsgemäss ist zwischen dem Dichtungs-Oberflächenabschnitt und einer Dichtungsfläche des ersten Bauteils ein dichtendes Dichtungselement derart angeordnet, dass der erste Gasbereich von einem dritten Gasbereich, in dem der Gewinde-Oberflächenabschnitt angeordnet ist, gas- oder partikeldichtend getrennt ist.

Zur Vermeidung einer Verunreinigung des Ventilinneren durch Reibpartikel, welche im Gewinde einer im Ventilinneren liegenden Verschraubung entstehen, wird somit eine Massnahme getroffen, welche zunächst der Lehre im Stand der Technik, wonach die Gewinde zur Vermeidung virtueller innerer Vakuumlecks zu belüften seien, entgegenzustehen scheint.

Gemäß der Erfindung wird die im Ventilinneren liegende Verschraubung mittels mindestens einer Dichtung gas- oder partikeldicht gekapselt. Somit wird der Gewindebereich der Schraubverbindung innerhalb des Ventilinneren vom restlichen Bereich gas- oder partikeldicht abgedichtet. Innerhalb des Vakuumbereichs wird also für die abzukapselnde Gewindeverbindung bewusst ein isolierter Bereich geschaffen, um ein Austreten von Partikel aus diesem Bereich zu verhindern.

Das erfindungsgemässe Vakuumventil umfasst ein Verschlussglied, das insbesondere als Verschlussplatte, Verschlussteller oder als Verschlussbalken ausgebildet ist.

Das Verschlussglied hat eine Verschlussfläche zum gasdichten Verschliessen einer Öffnung, die einen ersten Gasbereich mit einem zweiten Gasbereich verbindet. Diese Verschlussfläche wird insbesondere von einer Vorderseite des Verschlussglieds gebildet. Die Öffnung ist insbesondere in einer Ventilwand oder im Gehäuse des Ventils ausgebildet. Verschliesst das Verschlussglied die Öffnung, so trennt das Verschlussglied den ersten Gasbereich auf der einen Seite der Öffnung von dem zweiten Gasbereich auf der anderen Seite der Öffnung. In einer geöffneten Stellung des Verschlussgliedes sind der erste Gasbereich und der zweite Gasbereich über die offen stehende Öffnung zwar miteinander verbunden und bilden einen gemeinsamen Gasbereich, jedoch werden diese beiden Gasbereiche auch in der Offenstellung des Verschlussgliedes im Folgenden als geometrische und getrennte Gasbereiche betrachtet, die an einer von der Verschlussfläche in der geschlossenen Stellung des Verschlussgliedes aufgespannten geometrischen Grenzfläche aneinandergrenzen.

Das Vakuumventil ist beispielsweise als ein Transferventil mit einem insbesondere im Wesentlichen rechteckigen Öffnungsquerschnitt und einem plattenförmigen, insbesondere ebenfalls im Wesentlichen rechteckigen Verschlussbalken ausgebildet, wobei das Verstellen des Verschlussgliedes wie oben beschrieben mittels einer einstufigen oder zweistufigen Bewegung erfolgen kann.

An mindestens einem Verstellarm, der insbesondere von einer sich linear oder gebogen erstreckenden Schubstange oder einer Ventilstange gebildet wird und der beispielsweise stangenförmig ist und sich insbesondere entlang einer geometrischen Verstellachse erstreckt, ist das Verschlussglied angeordnet.

Zum Verstellen des Verschlussgliedes ist eine Antriebseinheit mit diesem Verstellarm mechanisch gekoppelt. Diese Antriebseinheit ist derart angeordnet und ausgebildet, dass das Verschlussglied in dem ersten Gasbereich durch Verstellen des Verstellarms mittels der Antriebseinheit zwischen einer Offenposition und einer Geschlossenposition und zurück verstellbar ist. Das Verschlussglied ist somit innerhalb des ersten Gasbereichs beweglich. In der Offenposition gibt das Verschlussglied die Öffnung frei, während die Verschlussfläche des Verschlussgliedes die Öffnung in der Geschlossenposition gasdicht verschliesst und den ersten Gasbereich von dem zweiten Gasbereich gasdicht trennt. Insbesondere liegt ein Randabschnitt der Verschlussfläche auf einem die Öffnung umschliessenden Ventilsitz gasdichtend auf, wobei in diesem Randbereich oder auf dem Ventilsitz eine Dichtung zur Herstellung eines gasdichten Kontakts fixiert ist.

Ausserdem besitzt das Vakuumventil ein Schraubelement zur mechanisch koppelnden Verbindung eines zumindest teilweise in dem ersten Gasbereich angeordneten ersten Bauteils des Vakuumventils mit einem zweiten Bauteil. Das erste Bauteil ist ein Bauteil des Vakuumventils, während das zweite Bauteil auch einer anderen Einheit zugeordnet sein kann, beispielsweise einer Vakuumkammer. Jedoch kann auch das zweite Bauteil ein Bauteil des Vakuumventils sein. Das erste Bauteil oder das zweite Bauteil ist mit der Antriebseinheit mechanisch gekoppelt. Insbesondere ist eines der beiden Bauteile ein von der Antriebseinheit mechanisch bewegbares oder antreibbares Bauteil. Alternativ ist eines der beiden Bauteile mit einem Gehäuse der Antriebseinheit mittelbar oder unmittelbar mechanisch gekoppelt.

Insbesondere wird das erste Bauteil von dem Verstellarm und das zweite Bauteil von dem Verschlussglied oder umgekehrt, also das erste Bauteil von dem Verschlussglied und das zweite Bauteil von dem Verstellarm gebildet, wobei der Verstellarm und das Verschlussglied mittels des Schraubelements verbunden sind.

Die äußere, also das Schraubelement geometrisch nach aussen begrenzende Oberfläche des Schraubelements gliedert sich in mehrere funktionelle und/oder strukturelle Abschnitte, nämlich zumindest in einen Gewinde-Oberflächenabschnitt, einen Eingriffs-Oberflächenabschnitt und einen dazwischen liegenden und diese Oberflächenabschnitt trennenden Kraftübertragungs-Oberflächenabschnitt. Vorzugsweise erstrecken sich alle Oberflächenabschnitte rings um eine erste Achse des Schraubelements.

Auf dem Gewinde-Oberflächenabschnitt ist ein sich um eine geometrische erste Achse erstreckendes erstes Gewinde ausgeformt. Bei diesem ersten Gewinde kann es sich um ein Aussengewinde oder ein Innengewinde handeln. Unter einem Gewinde ist allgemein eine profilierte Einkerbung, also einen Gewindegang, im Schraubelement zu verstehen, die fortlaufend wendelartig um eine zylinderförmige Wandung außen bzw. innen in einer Schraubenlinie verläuft.

Auf dem Eingriffs-Oberflächenabschnitt ist ein derartig ausgebildeter Eingriff ausgeformt, dass das Schraubelement um die erste Achse, insbesondere mittels eines formschlüssig in den Eingriff eingreifbaren Werkzeugs, verdrehbar und/oder formschlüssig verdrehgesichert ist. Der in dem ersten Gasbereich angeordnete Eingriffs-Oberflächenabschnitt kann beispielsweise von einem inneren oder äußeren Mehrkant, insbesondere einem Sechs- oder Vierkant, einem Mehrzahn, einem Vielzahn oder einem Mehrrund, sowie einem Schlitz oder Kreuzschlitz gebildet werden. In anderen Worten ist dieser Eingriffs-Oberflächenabschnitt derart geformt, dass ein Drehmoment um die erste Achse des Schraubelements durch ein formschlüssiges Eingreifen zwischen dem Schraubelement und ein in diesen Eingriffs-Oberflächenabschnitt eingreifendes Eingriffselement übertragbar ist. Dieses Eingriffselement kann beispielsweise ein Werkzeug oder eine Verdrehsicherung sein.

Der Kraftübertragungs-Oberflächenabschnitt, der zwischen dem Gewinde-Oberflächenabschnitt und dem Eingriffs-Oberflächenabschnitt angeordnet ist, weist zumindest teilweise in eine sich entlang der ersten Achse erstreckende Schraub-Schliessrichtung. Dieser Kraftübertragungs-Oberflächenabschnitt wird beispielsweise von einem Absatz oder einer Schulter, die radial über das erste Gewinde nach aussen hinausragt, gebildet.

Das erste Bauteil hat ein sich entlang der ersten Achse erstreckendes Durchgangsloch, insbesondere eine Durchgangsbohrung. Das Durchgangsloch kann einen beliebigen Querschnitt aufweisen, insbesondere ist es rund. Das Durchgangsloch wird von einer Auflagefläche umgeben, insbesondere rings umschlossen, die zumindest teilweise in eine der Schraub-Schliessrichtung entgegen gesetzten Schraub-Öffnungsrichtung weist. Die Auflagefläche und der Kraftübertragungs-Oberflächenabschnitt sind zur gegenseitigen Auflage und Kraftübertragung in Richtung parallel zur ersten Achse ausgeformt.

Das erste Bauteil und das zweite Bauteil sind durch einen durch das Durchgangsloch erfolgenden Gewindeeingriff zwischen dem ersten Gewinde des Schraubelements und einem dem zweiten Bauteil zugeordneten zweiten Gewinde sowie durch Aufliegen des Kraftübertragungs-Oberflächenabschnitts auf der Auflagefläche des ersten Bauteils formschlüssig mechanisch koppelbar oder gekoppelt. In anderen Worten sind das erste Bauteil und das zweite Bauteil mittels des Schraubelements formschlüssig miteinander verbindbar oder verbunden, wobei diese Verbindung über einen Gewindeeingriff zwischen dem ersten Gewinde des Schraubelements und dem zweiten Gewinde, welches mechanisch mit dem zweiten Bauteil gekoppelt ist, erfolgt.

Erfindungsgemäss weist das Schraubelement einen Dichtungs-Oberflächenabschnitt auf. Dieser Dichtungs-Oberflächenabschnitt ist zwischen dem Gewinde-Oberflächenabschnitt und dem Eingriffs-Oberflächenabschnitt angeordnet, umschliesst die erste Achse und trennt den Gewinde-Oberflächenabschnitt und den Eingriffs-Oberflächenabschnitt voneinander. Vorzugsweise liegt der Dichtungs-Oberflächenabschnitt in Bezug auf die erste Achse axial zwischen dem Gewinde-Oberflächenabschnitt und dem Eingriffs-Oberflächenabschnitt.

Das erste Bauteil weist benachbart zu der Auflagefläche eine das Durchgangsloch umschliessende Dichtungsfläche auf. Zwischen dem Dichtungs-Oberflächenabschnitt des Schraubelements und der Dichtungsfläche des ersten Bauteils ist ein die erste Achse umschliessendes, dichtendes Dichtungselement derart angeordnet, dass der erste Gasbereich von einem dritten Gasbereich, in dem der Gewinde-Oberflächenabschnitt angeordnet ist, getrennt ist. In anderen Worten sind die Dichtungsfläche und der Dichtungs-Oberflächenabschnitt derart ausgebildet und angeordnet, dass ein dazwischen liegendes Dichtungselement, das entweder auf der Dichtungsfläche oder dem Dichtungs-Oberflächenabschnitt fixiert ist, den ersten Gasbereich, in welchem der Eingriffs-Oberflächenabschnitt des Schraubelements angeordnet ist, von dem dritten Gasbereich, in welchem der Gewinde-Oberflächenabschnitt angeordnet ist, gas- oder partikeldichtend trennt.

Das sich rings um die erste Achse erstreckende Dichtungselement bildet also eine gas- oder partikeldichte Verbindung zwischen dem Dichtungs-Oberflächenabschnitt und der Dichtungsfläche, so dass dieses Dichtungselement eine gas- oder partikeldichte Trennung zwischen dem ersten Gasbereich und dem dritten Gasbereich bildet.

Mittels dieser Trennung zwischen dem ersten Gasbereich, in welchem sich das Verschlussglied befindet und welcher von prozessschädigenden Reibpartikeln freizuhalten ist, und dem dritten Gasbereich, in welchem der Gewinde-Oberflächenabschnitt mit dem ersten Gewinde angeordnet ist, wird verhindert, dass Reibpartikel, welche durch eine Relativbewegung zwischen dem ersten Gewinde des Schraubelements und dem zweiten Gewinde, das dem zweiten Bauteil zugeordnet ist, innerhalb des dritten Gasbereichs entstehen, in den ersten Gasbereich vordringen. Somit ist es erfindungsgemäss möglich, die Anzahl der im ersten und zweiten Gasbereich befindlichen potentiell prozessschädigenden Reibpartikel gering zu halten, da diese Reibpartikel im dritten Gasbereich bleiben.

Der Dichtungs-Oberflächenabschnitt kann in einer Ausführungsform zwischen dem Kraftübertragungs-Oberflächenabschnitt und dem Eingriffs-Oberflächenabschnitt derart angeordnet sein, dass der Kraftübertragungs-Oberflächenabschnitt in dem dritten Gasbereich ist. In diesem Fall werden ebenfalls solche Reibpartikel, welche durch eine Relativbewegung zwischen dem Kraftübertragungs-Oberflächenabschnitt und der Auflagefläche entstehen, an einem Eindringen in den ersten Gasbereich gehindert. Alternativ besteht aber auch die Möglichkeit, dass der Dichtungs-Oberflächenabschnitt zwischen dem Kraftübertragungs-Oberflächenabschnitt und dem Gewinde-Oberflächenabschnitt angeordnet ist.

Eine Variante der Erfindung sieht vor, dass das erste Bauteil eine zumindest teilweise nach innen auf die erste Achse weisende, die Dichtungsfläche bildende Innenmantelfläche aufweist. Das Schraubelement hat eine zumindest teilweise nach aussen weisende, den Dichtungs-Oberflächenabschnitt bildende Aussenmantelfläche. Die Aussenmantelfläche und/oder die Innenmantelfläche haben insbesondere die geometrische Form einer geometrischen geraden Kreiszylindermantelfläche oder einer geometrischen geraden Kreiskegelmantelfläche. Vorzugsweise haben die Innenmantelfläche und die Aussenmantelfläche die gemeinsame geometrische erste Achse.

In einer ersten speziellen Variante hat die Innenmantelfläche die geometrische Form einer geometrischen geraden Kreiszylindermantelfläche, die insbesondere von einer axial zu dem Durchgangsloch benachbart angeordneten und um die erste Achse verlaufenden Zylindersenkung im ersten Bauteil gebildet wird. In einer zweiten speziellen Variante hat die Innenmantelfläche die geometrische Form einer geometrischen geraden Kreiskegelmantelfläche, die insbesondere von einer axial zu dem Durchgangsloch benachbart angeordneten und um die erste Achse verlaufenden Kegelsenkung im ersten Bauteil gebildet wird.

Das Dichtungselement kann auf dem Dichtungs-Oberflächenabschnitt des Schraubelements fixiert sein. Insbesondere kann das Dichtungselement als ein O-Ring ausgebildet sein, wobei der Dichtungs-Oberflächenabschnitt eine Umfangsnut aufweist, in welcher dieser O-Ringfixiert ist. Alternativ kann das Dichtungselement als aufvulkanisierte Dichtung ausgebildet und auf dem Dichtungs-Oberflächenabschnitt aufvulkanisiert sein.

Es besteht alternativ erfindungsgemäss auch die Möglichkeit, dass das Dichtungselement auf der Dichtungsfläche des ersten Bauteils fixiert ist. Das Dichtungselement kann als ein O-Ring ausgebildet sein, wobei die Dichtungsfläche eine Umfangsnut aufweist, in welcher der O-Ring fixiert ist, oder das Dichtungselement ist eine auf der Dichtungsfläche aufvulkanisierte Dichtung.

Das Dichtungselement kann erfindungsgemäss entweder gasdichtend oder partikeldichtend sein. Ist das Dichtungselement gasdichtend, so ist es zwischen dem Dichtungs-Oberflächenabschnitt und der Dichtungsfläche derart angeordnet, dass der erste Gasbereich von dem dritten Gasbereich gasdicht getrennt ist. Hierzu besteht das Dichtungselement vorzugsweise aus einem für vakuumdichte Abdichtung geeigneten Werkstoff. Insbesondere besteht das Dichtungselement im Wesentlichen aus einem Elastomer, insbesondere Kautschuk. Geeignete Kautschuke sind insbesondere Fluorkautschuk, auch FKM genannt, oder Perfluorkautschuk, auch FFKM genannt.

Bei einer gasdichten Trennung zwischen dem ersten Gasbereich und dem dritten Gasbereich kommt es zu keinem Gasaustausch zwischen dem partikelbelasteten dritten Gasbereich und dem partikelfrei zu haltenden ersten Gasbereich, wodurch die Partikelbelastung im ersten Gabereich gering gehalten werden kann. Aufgrund der gasdichten Trennung kann jedoch ein Druckunterschied zwischen dem ersten Gasbereich und dem dritten Gasbereich entstehen. Die gasdichte Abdichtung ist daher vorzugsweise derart auszugestalten, dass die gasdichte und somit auch partikeldichte Trennung selbst bei den herrschenden Druckdifferenzen zwischen dem ersten Gasbereich und dem dritten Gasbereich gewährleistet bleibt.

Alternativ besteht aber auch erfindungsgemäss die Möglichkeit, das Dichtungselement partikeldichtend auszugestalten. In diesem Falle ist das Dichtungselement derart partikeldichtend ausgebildet, dass in dem dritten Gasbereich befindliche Mikropartikel mit einer Partikelgrösse von mehr als 1 oder 0,1 oder 0,01 Mikrometer von dem Dichtungselement im Wesentlichen blockiert und an einem Eindringen in den ersten Gasbereich im Wesentlichen gehindert werden. Insbesondere ist das Dichtungselement als Filter, insbesondere als Schwebstofffilter, zur Ausfilterung von Mikropartikeln mit einer Partikelgrösse von mehr als 1 oder 0,1 oder 0,01 Mikrometer, insbesondere mit einem Abscheidegrad von über 85% oder 95% oder 99% oder 99,5% oder 99,95%, ausgebildet. Beispielsweise besteht das Dichtungselement aus einem Fasermaterial oder einem insbesondere gesinterten oder gewebten metallischen Werkstoff. Insbesondere besteht es aus einem mikroporösen, insbesondere gesinterten, dünnfasrigen oder gesponnenen Material, insbesondere mikroporösem oder dünnfasrigem, insbesondere gesponnenem Polytetrafluorethylen. Das Dichtungselement kann jedoch auch von einem mikroporösen metallischen Filter gebildet werden. Die Partikelgrösse ist insbesondere der geometrische oder physikalische Äquivalentdurchmesser eines Partikels.

Ein Vorteil dieser partikeldichten, aber nicht zwangsläufig gasdichten Trennung besteht darin, dass durch einen gefilterten Gasaustausch zwischen dem ersten Gasbereich und dem dritten Gasbereich einerseits ein Partikelaustausch, andererseits auch Druckdifferenzen zwischen diesen Gasbereichen vermieden werden können. Durch die Vermeidung einer Druckdifferenz wird das Risiko eines inneren virtuellen Lecks im Ventilinneren reduziert.

Die gleiche Wirkung kann jedoch auch mittels einer Verbindungsöffnung erzielt werden, die den ersten Gasbereich und den dritten Gasbereich miteinander verbindet, wobei in der Verbindungsöffnung oder an der Verbindungsöffnung ein Filterelement angeordnet ist. Dieses Filterelement ist derart partikeldichtend ausgebildet, dass in dem dritten Gasbereich befindliche Mikropartikel mit einer Partikelgrösse von mehr als 1 oder 0,1 oder 0,01 Mikrometer von dem Filterelement im Wesentlichen blockiert und an einem Eindringen in den ersten Gasbereich im Wesentlichen gehindert werden. Insbesondere ist das Filterelement zur Ausfilterung von Mikropartikeln mit einer Partikelgrösse von mehr als 1 oder 0,1 oder 0,01 Mikrometer, insbesondere mit einem Abscheidegrad von über 85% oder 95% oder 99% oder 99,5% oder 99,95%, beispielsweise in Form eines Schwebstofffilters ausgebildet.

Dieses Filterelement kann aus den gleichen Materialen bestehen wie das oben beschriebene partikeldichtende Dichtungselement. Die druckausgleichende und partikeldichte Verbindungsöffnung ist vor allem bei Einsatz eines gasdichtenden Dichtungselements vorteilhaft, um Druckdifferenzen zwischen dem ersten Gasbereich und dem dritten Gasbereich zu vermeiden.

In einer speziellen Ausführungsform sind die Verbindungsöffnung und das Filterelement in dem Schraubelement angeordnet.

Das Schraubelement kann insbesondere als Schraube oder Mutter ausgebildet sind.

Ist das Schraubelement eine Schraube mit einem Gewindeabschnitt und einem Schraubenkopf, so ist der Gewinde-Oberflächenabschnitt auf dem durch das Durchgangsloch des ersten Bauteils hindurch geführten Gewindeabschnitt angeordnet. Der Eingriffs-Oberflächenabschnitt, der Kraftübertragungs-Oberflächenabschnitt und der Dichtungs-Oberflächenabschnitt befinden sich auf dem Schraubenkopf. Insbesondere ist das erste Gewinde des Schraubelements als erstes Aussengewinde und das dem zweiten Bauteil zugeordnete zweite Gewinde als zweites Innengewinde ausgebildet, jedoch ist auch eine umgekehrte Ausbildung möglich. Beispielsweise ist das zweite Gewinde in einem Sackloch im zweiten Bauteil ausgeformt. Insbesondere ist der Schraubenkopf als Zylinderschraubenkopf ausgebildet.

Ist das Schraubelement eine Mutter, so ist das zweite Gewinde insbesondere auf einem durch das Durchgangsloch hindurch geführten Gewindebolzen des zweiten Bauteils ausgeformt. Insbesondere ist das erste Gewinde als erstes Innengewinde und das zweite Gewinde als zweites Aussengewinde ausgebildet. Eine umgekehrte Ausbildung ist möglich. Beispielsweise ist das erste Gewinde in einem Sackloch in der Mutter ausgeformt, wobei die Mutter als Hutmutter ausgebildet sein kann.

In einer möglichen Ausführungsform ist der dritte Gasbereich, in dem der Gewinde-Oberflächenabschnitt angeordnet ist, innerhalb des ersten Gasbereichs und von diesem insbesondere gasdicht oder partikeldicht getrennt angeordnet. Somit wir dieser dritte Gasbereich vom dem ersten Gasbereich vollständig umschlossen. Alternativ besteht jedoch auch die Möglichkeit, dass der dritte Gasbereich und der erste Gasbereich aneinandergrenzen und von dem Dichtungselement getrennt werden.

In einer Weiterbildung der Erfindung ist ein insbesondere als zweiter O-Ring ausgebildetes gas- oder partikeldichtendes zweites Dichtungselement dichtend zwischen dem ersten Bauteil und dem zweiten Bauteil angeordnet. Dieses zweite Dichtungselement trennt zusätzlich den ersten Gasbereich und den dritte Gasbereich im Bereich zwischen dem ersten und zweiten Bauteil gas- oder partikeldicht und umschliesst insbesondere das Durchgangsloch.

In einer Weiterbildung der Erfindung ist die Antriebseinheit derart ausgebildet, dass das Verschlussglied durch Verstellen des Verstellarms in axiale Richtung parallel zu der Verstellachsen mittels der Antriebseinheit zwischen der Offenposition und einer Zwischenposition und in Richtung quer zu der Verstellachse zwischen der Zwischenposition und der Geschlossenposition verstellbar ist. In der Offenposition gibt das Verschlussglied die Öffnung frei. In der Zwischenposition überdeckt die Verschlussfläche die Öffnung und befindet sich in beabstandeter Gegenüberlage zu einem die Öffnung umgebenden Ventilsitz. In der Geschlossenposition verschliesst die Verschlussfläche die Öffnung gasdicht und trennt den ersten Gasbereich von dem zweiten Gasbereich gasdicht.

Ein sich quer zur Verstellachse erstreckender Querträger ist an einer mittleren Verbindungsstelle mit dem Verstellarm verbunden. Der Querträger ist auf einer der Verschlussfläche gegenüber liegenden Rückseite des Verschlussgliedes an mindestens zwei beidseitig zu der mittleren Verbindungsstelle liegenden seitlichen Verbindungsstellen mit dem Verschlussglied verbunden. In einem mittleren Abschnitt, der die mittlere Verbindungsstelle und beidseitig an diese anschliessende Abschnitte umfasst und sich zwischen den seitlichen Verbindungsstellen erstreckt, weist der Querträger einen Abstand von der Rückseite auf. Zudem ist der Querträger derart elastisch ausgebildet, dass durch eine Verwindung des Querträgers das Verschlussglied relativ zu dem Verstellarm um eine rechtwinklig zu der Verstellachse stehende Schwenkachse verschwenkbar und insbesondere einstückig ausgebildet ist. Eine derartige Aufhängung eines Verschlussgliedes an einem Verstellarm mittels eines quer zum Verstellarm sich erstreckenden Querträgers wird in der DE 10 2008 061 315 B4 beschrieben.

Eine Weiterbildung der Erfindung sieht vor, dass die mittlere Verbindungsstelle des Querträgers das beschriebene Schraubelement aufweist, wobei das erste Bauteil von dem Verstellarm und das zweite Bauteil von dem Querträger oder umgekehrt, also das erste Bauteil von dem Querträger und das zweite Bauteil von dem Verstellarm gebildet wird.

Alternativ oder zusätzlich können die seitlichen Verbindungsstellen jeweils das Schraubelement aufweisen, wobei das erste Bauteil von dem Verschlussglied und das zweite Bauteil von dem Querträger oder das erste Bauteil von dem Querträger und das zweite Bauteil von dem Verschlussglied gebildet wird.

Das erste Bauteil kann jedoch auch von der Antriebseinheit und das zweite Bauteil von einer Wand, welche die Öffnung aufweist, oder umgekehrt gebildet werden. In diesem Fall kommt die Schraubverbindung zwischen der die Öffnung aufweisenden Wand und der Antriebseinheit zum Einsatz.

Ausserdem umfasst die Erfindung ein Schraubelement, insbesondere eine Schraube oder eine Mutter, für das beschriebene erfindungsgemässe Vakuumventil. Das Schraubelement hat einen Gewinde-Oberflächenabschnitt, einen Eingriffs-Oberflächenabschnitt, einen Kraftübertragungs-Oberflächenabschnitt und einen Stirn-Oberflächenabschnitt.

Der Gewinde-Oberflächenabschnitt hat ein sich um eine geometrische erste Achse erstreckendes erstes Gewinde.

Auf dem Eingriffs-Oberflächenabschnitt ist ein derartig ausgebildeter Eingriff ausgeformt, dass das Schraubelement um die erste Achse, insbesondere mittels eines formschlüssig in den Eingriff eingreifbaren Werkzeugs, verdrehbar und/oder formschlüssig verdrehgesichert ist.

Der Kraftübertragungs-Oberflächenabschnitt ist zwischen dem Gewinde-Oberflächenabschnitt und dem Eingriffs-Oberflächenabschnitt angeordnet und weist zumindest teilweise in eine sich entlang der ersten Achse erstreckende Schraub-Schliessrichtung.

Der Stirn-Oberflächenabschnitt liegt dem Eingriffs-Oberflächenabschnitt gegenüber und weist zumindest teilweise in die Schraub-Schliessrichtung weist, wobei der Gewinde-Oberflächenabschnitt zwischen dem Stirn-Oberflächenabschnitt und dem Kraftübertragungs-Oberflächenabschnitt angeordnet ist.

Erfindungsgemäss hat das Schraubelement einen Dichtungs-Oberflächenabschnitt, der zwischen dem Gewinde-Oberflächenabschnitt und dem Eingriffs-Oberflächenabschnitt angeordnet ist. Der Dichtungs-Oberflächenabschnitt trennt den Gewinde-Oberflächenabschnitt und den Eingriffs-Oberflächenabschnitt voneinander und umschliesst die erste Achse. Ein Dichtungselement ist auf dem Dichtungs-Oberflächenabschnitt des Schraubelements fixiert.

Das Dichtungselement besteht vorzugsweise im Wesentlichen aus einem Elastomer, insbesondere Kautschuk, insbesondere Fluorkautschuk oder Perfluorkautschuk. Das Dichtungselement kann als ein O-Ring ausgebildet sein, wobei der Dichtungs-Oberflächenabschnitt eine Umfangsnut aufweist, in welcher der O-Ring fixiert ist. Alternativ ist das Dichtungselement als aufvulkanisierte Dichtung ausgebildet und auf dem Dichtungs-Oberflächenabschnitt aufvulkanisiert.

Zwischen dem Eingriffs-Oberflächenabschnitt und dem Stirn-Oberflächenabschnitt ist eine Verbindungsöffnung ausgeformt. In dieser Verbindungsöffnung ist ein Filterelement angeordnet. Wie oben bereits in Zusammenhang mit dem Vakuumventil beschrieben kann das Filterelement zur Ausfilterung von Partikeln mit einer Partikelgrösse von mehr als 1 oder 0,1 oder 0,01 Mikrometer, insbesondere mit einem Abscheidegrad von über 85% oder 95% oder 99% oder 99,5% oder 99,95%, insbesondere in Form eines Schwebstofffilters, ausgebildet sein. Das Filterelement besteht aus einem Fasermaterial oder einem insbesondere gesinterten oder gewebten metallischen Werkstoff. Das Schraubelement weist insbesondere eine zumindest teilweise nach aussen weisende, den Dichtungs-Oberflächenabschnitt bildende Aussenmantelfläche auf, die insbesondere die geometrische Form einer geometrischen geraden Kreiszylindermantelfläche oder einer geometrischen geraden Kreiskegelmantelfläche hat.

Das erfindungsgemässe Vakuumventil und das erfindungsgemässe Schraubelement werden nachfolgend anhand von in den Zeichnungen schematisch dargestellten konkreten Ausführungsbeispielen rein beispielhaft näher beschrieben.

Im Einzelnen zeigen:
- Figur 1a: eine seitliche Querschnittsansicht auf eine erste Ausführungsform des Vakuumventils in einer Offenposition;
- Figur 1b: die seitliche Querschnittsansicht auf die erste Ausführungsform des Vakuumventils in einer Zwischenposition;
- Figur 1c: die seitliche Querschnittsansicht auf die erste Ausführungsform des Vakuumventils in einer Geschlossenposition;
- Figur 2: eine seitliche Querschnittsansicht auf eine zweite Ausführungsform des Vakuumventils in einer Geschlossenposition;
- Figur 3a: eine Schrägansicht auf ein Verschlussglied, einen Querträger und einen Verstellarm einer dritten Ausführungsform des Vakuumventils;
- Figur 3b: eine Schrägansicht auf die dritte Ausführungsform des Vakuumventils;
- Figur 4a: eine seitliche Detail-Querschnittsansicht auf ein erstes Bauteil, ein zweites Bauteil und eine Schraube einer vierten Ausführungsform des Vakuumventils im gekoppelten Zustand mit einem in einer Umfangsnut der Schraube fixierten O-Ring;
- Figur 4b: eine seitliche Detail-Querschnittsansicht auf das erste Bauteil, das zweite Bauteil und die Schraube der vierten Ausführungsform des Vakuumventils im entkoppelten Zustand mit dem in der Umfangsnut der Schraube fixierten O-Ring;
- Figur 5a: eine seitliche Detail-Querschnittsansicht auf ein erstes Bauteil, ein zweites Bauteil und eine Schraube einer fünften Ausführungsform des Vakuumventils im gekoppelten Zustand mit einem in einer Umfangsnut einer Zylindersenkung des ersten Bauteils fixierten O-Ring;
- Figur 5b: eine seitliche Detail-Querschnittsansicht auf das erste Bauteil, das zweite Bauteil und die Schraube der fünften Ausführungsform des Vakuumventils im entkoppelten Zustand mit dem in der Zylindersenkung der Umfangsnut des ersten Bauteils fixierten O-Ring;
- Figur 6a: eine seitliche Detail-Querschnittsansicht auf ein erstes Bauteil, ein zweites Bauteil und eine Schraube einer sechsten Ausführungsform des Vakuumventils im gekoppelten Zustand mit einem in einer Umfangsnut eines Durchgangslochs des ersten Bauteils fixierten O-Ring;
- Figur 6b: eine seitliche Detail-Querschnittsansicht auf das erste Bauteil, das zweite Bauteil und die Schraube der sechsten Ausführungsform des Vakuumventils im entkoppelten Zustand mit dem in der Umfangsnut des Durchgangslochs des ersten Bauteils fixierten O-Ring;
- Figur 7a: eine seitliche Detail-Querschnittsansicht auf ein erstes Bauteil, ein zweites Bauteil und eine Schraube einer siebten Ausführungsform des Vakuumventils im gekoppelten Zustand mit einer Verbindungsöffnung und einem Filterelement in der Schraube;
- Figur 7b: eine seitliche Detail-Querschnittsansicht auf das erste Bauteil, das zweite Bauteil und die Schraube der siebten Ausführungsform des Vakuumventils im entkoppelten Zustand mit der Verbindungsöffnung und dem Filterelement in der Schraube;
- Figur 8a: eine seitliche Detail-Querschnittsansicht auf ein erstes Bauteil, ein zweites Bauteil und eine Schraube einer achten Ausführungsform des Vakuumventils im gekoppelten Zustand mit einer Kegelsenkung des ersten Bauteils und einer auf die Schraube vulkanisierten Dichtung;
- Figur 8b: eine seitliche Detail-Querschnittsansicht auf das erste Bauteil, das zweite Bauteil und die Schraube der achten Ausführungsform des Vakuumventils im entkoppelten Zustand mit der Kegelsenkung des ersten Bauteils und der auf die Schraube vulkanisierten Dichtung;
- Figur 9a: eine seitliche Detail-Querschnittsansicht auf ein erstes Bauteil, einen Gewindebolzen eines zweiten Bauteils und eine Mutter einer neunten Ausführungsform des Vakuumventils im gekoppelten Zustand mit einem in einer Umfangsnut der Mutter fixierten O-Ring; und
- Figur 9b: eine seitliche Detail-Querschnittsansicht auf das erste Bauteil, den Gewindebolzen des zweiten Bauteils und die Mutter der neunten Ausführungsform des Vakuumventils im entkoppelten Zustand mit dem in der Umfangsnut der Mutter fixierten O-Ring.

Die Figuren zeigen neun unterschiedliche Ausführungsformen des erfindungsgemässen Vakuumventils in unterschiedlichen Zuständen, aus unterschiedlichen Ansichten und in unterschiedlichen Detaillierungsgraden. Die Ausführungsformen unterscheiden sich zum Teil lediglich bezüglich bestimmter Merkmale voneinander, weshalb die Figuren im Folgenden gemeinsam beschrieben werden und teilweise nur auf die Unterschiede der Ausführungsformen eingegangen wird. Auf bereits in vorangegangenen Figuren erläuterte Bezugszeichen und Merkmale wird nicht immer erneut eingegangen.

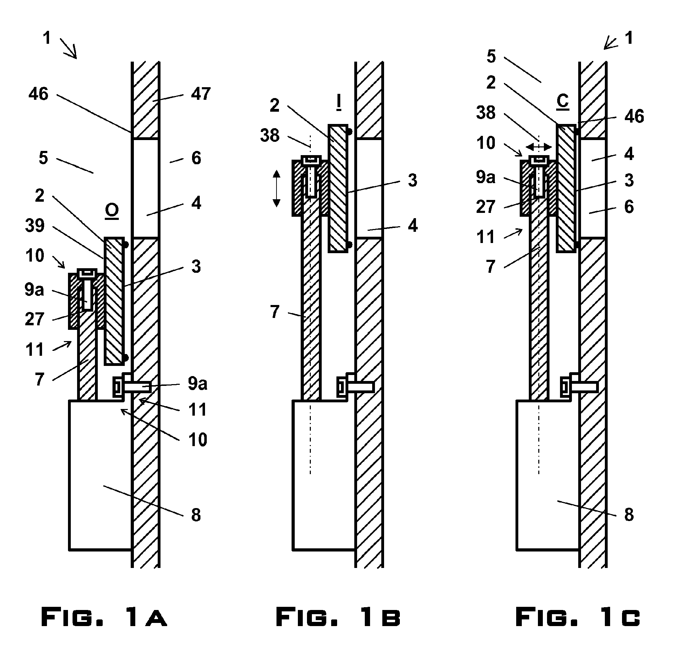

In den Figuren 1a, 1b und 1c ist ein Vakuumventil 1 in Form eines Transferventils dargestellt. Dieses Transferventil ist eine Sonderform eines Schieberventils. Das Vakuumventil 1 hat ein rechteckiges, plattenförmiges Verschlussglied 2, das eine Verschlussfläche 3 zum gasdichten Verschliessen einer Öffnung 4 aufweist. Die Öffnung 4 hat einen den Verschlussglied 2 entsprechenden Querschnitt und ist in einer Wand 47 ausgeformt. Die Öffnung 4 ist von einem Ventilsitz 46 umgeben.

Die Öffnung 4 verbindet einen ersten Gasbereich 5, welcher sich in den Figuren 1a, 1b, 1c links der Wand 47 befindet, mit einem zweiten Gasbereich 6 rechts der Wand 47.

Das Verschlussglied 2 ist an einem Verstellarm 7 angeordnet, der stangenförmig ist und sich entlang einer geometrischen Verstellachse 38 erstreckt. Der Verstellarm 7 ist mit einer Antriebseinheit 8 mechanisch gekoppelt ist, mittels welcher das Verschlussglied 2 in dem ersten Gasbereich 5 links der Wand 47 durch Verstellen des Verstellarms 7 mittels der Antriebseinheit 8 zwischen einer Offenposition O, Figur 1a, über eine Zwischenposition I, Figur 1b, in eine Geschlossenposition, Figur 1c, verstellbar ist.

In der Offenposition O befindet sich das Verschlussglied 2 ausserhalb des Projektionsbereichs der Öffnung 4 und gibt diese vollständig frei, wie in Figur 1a gezeigt.

Durch Verstellen des Verstellarms 7 in axiale Richtung parallel zu der Verstellachsen 38 und parallel zu der Wand 47 kann das Verschlussglied 2 mittels der Antriebseinheit 8 von der Offenposition O in die Zwischenposition I verstellt werden.

In dieser Zwischenposition I überdeckt die Verschlussfläche 3 die Öffnung 4 und befindet sich in beabstandeter Gegenüberlage zu dem die Öffnung 4 umgebenden Ventilsitz 46, wie in Figur 1b gezeigt.

Durch Verstellen des Verstellarms 7 in Richtung quer zu der Verstellachse 38, also senkrecht zur Wand 47 und zum Ventilsitz 46 kann das Verschlussglied 2 von der Zwischenposition I in die Geschlossenposition C verstellt werden.

In der Geschlossenposition C verschliesst die Verschlussfläche 3 die Öffnung 4 gasdicht und trennt den ersten Gasbereich 5 von dem zweiten Gasbereich 6 gasdicht.

Das Öffnen und Schliessen des Vakuumventils 1 erfolgt also mittels der Antriebseinheit 8 durch eine L-förmige Bewegung des Verschlussgliedes 2 und des Verstellarms 7. Daher wird das gezeigte Transferventil auch L-Typ-Ventil genannt.

In der Offenposition O sind der erste Gasbereich 1 und der zweite Gasbereich 6 über die offen stehende Öffnung 4 zwar miteinander verbunden und bilden einen gemeinsamen Gasbereich, jedoch werden diese beiden Gasbereiche 1 und 6 im Folgenden als geometrische Gasbereiche, deren Trennfläche sich durch die Geschlossenposition C bestimmt, angesehen. Die Trennfläche zwischen dem ersten Gasbereich 1 und dem zweiten Gasbereich 6 wird im vorliegenden Fall somit von der geometrischen Ebene gebildet, auf welcher sich der Ventilsitz 46 der Wand 47 erstreckt, wie in Figur 1a gezeigt.

Das Verschlussglied 2 ist auf dessen Rückseite 39, die der Verschlussfläche 3 gegenüberliegt, mittels eines Schraubelements 9a mechanische an dem Verstellarm 7 fixiert. Das Schraubelement wird von einer Schraube 9a gebildet, die durch ein auf der Rückseite 39 des Verschlussgliedes 2 ausgeformtes Durchgangsloch hindurchgeführt ist und in ein Gewinde des Verstellarms 7 eingreift. Diese Schraubverbindung koppelt somit mechanisch das Verschlussglied 2, welches abstrakt ein erstes Bauteil 10 bildet, mit dem Verstellarm 7, welcher abstrakt ein zweites Bauteil 11 bildet. Beide Bauteile 10 und 11 befinden sich innerhalb des ersten Gasbereichs 5, sind Bauteile des Vakuumventils 1 und sind mit der Antriebseinheit 8 mechanisch gekoppelt. Im vorliegenden Fall ist das zweite Bauteil 11, nämlich der Verstellarm 7 unmittelbar mit der Antriebseinheit 8 mechanisch gekoppelt und von dieser verstellbar. Innerhalb der Schraubverbindung nahe der Schraube 9a befindet sich ein dritter Gasbereich 27, welcher innerhalb des ersten Gasbereichs 5 liegt und von diesem vollständig umschlossen wird. Der genaue Aufbau dieser Schraubverbindung und die Anordnung des dritten Gasbereichs 27 werden im Folgenden genauer beschrieben.

Das Vakuumventil in den Figuren 1a, 1b, 1c weist ausserdem eine zweite Schraubverbindung auf, mittels welcher die Antriebseinheit 8 mit der Wand 47 mechanisch gekoppelt ist. Diese Schraubverbindung wird von einer Schraube 9a gebildet, welche durch ein Durchgangsloch, das in der abstrakt ein erstes Bauteil 10 bildenden Antriebseinheit 8 ausgeformt ist, hindurchgeführt ist und in ein Gewinde der Wand 47, die abstrakt ein zweites Bauteil 11 bildet, eingreift, wobei auch eine umgekehrte Anordnung möglich ist. In diesem Falle ist das erste Bauteil 10, nämlich die Antriebseinheit 8, ein Bauteil des Vakuumventils 1, jedoch muss das zweite Bauteil 11, nämlich die Wand 47, nicht zwangsläufig ein Bauteil des Vakuumventils 1 selbst sein, sondern kann auch einer anderen Einheit, beispielsweise einer Vakuumkammer, zugeordnet sein.

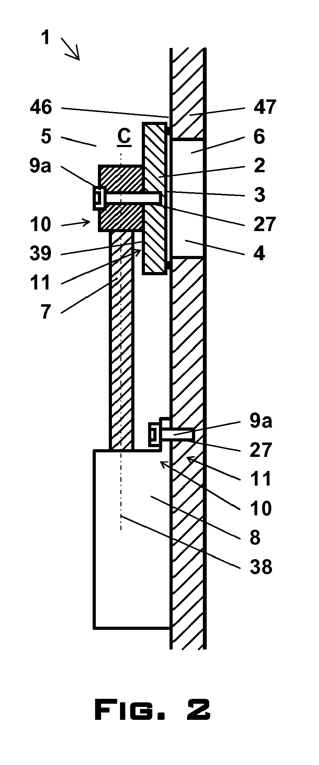

In Figur 2 ist ein dem ersten Ausführungsbeispiel ähnliches zweites Ausführungsbeispiel des Vakuumventils 1 in der Geschlossenposition C dargestellt. Dieses zweite Ausführungsbeispiel unterscheidet sich jedoch dadurch vom ersten Ausführungsbeispiel, dass die Schraube 9a durch ein in dem Verstellarm 7 ausgeformtes Durchgangsloch hindurchgeführt ist und in ein Gewinde auf der Rückseite 39 des Verschlussgliedes 2 eingreift. Diese Schraubverbindung koppelt somit mechanisch den Verstellarm 7, welcher abstrakt ein erstes Bauteil 10 bildet, mit dem Verschlussglied 2, welches abstrakt ein zweites Bauteil 11 bildet. Im vorliegenden Fall ist das erste Bauteil 10, nämlich der Verstellarm 7, unmittelbar mit der Antriebseinheit 8 mechanisch gekoppelt und von dieser verstellbar. Innerhalb der Schraubverbindung nahe der Schraube 9a befindet sich ein dritter Gasbereich 27, welcher innerhalb des ersten Gasbereichs 5 liegt und von diesem vollständig umschlossen wird. Auch der genaue Aufbau dieser Schraubverbindung und die Anordnung des dritten Gasbereichs 27 werden im Folgenden genauer beschrieben.

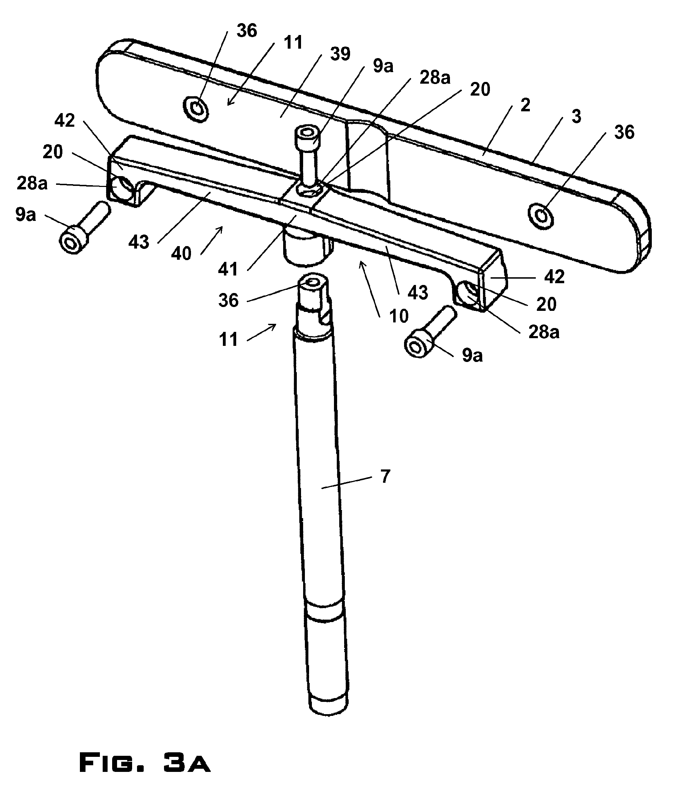

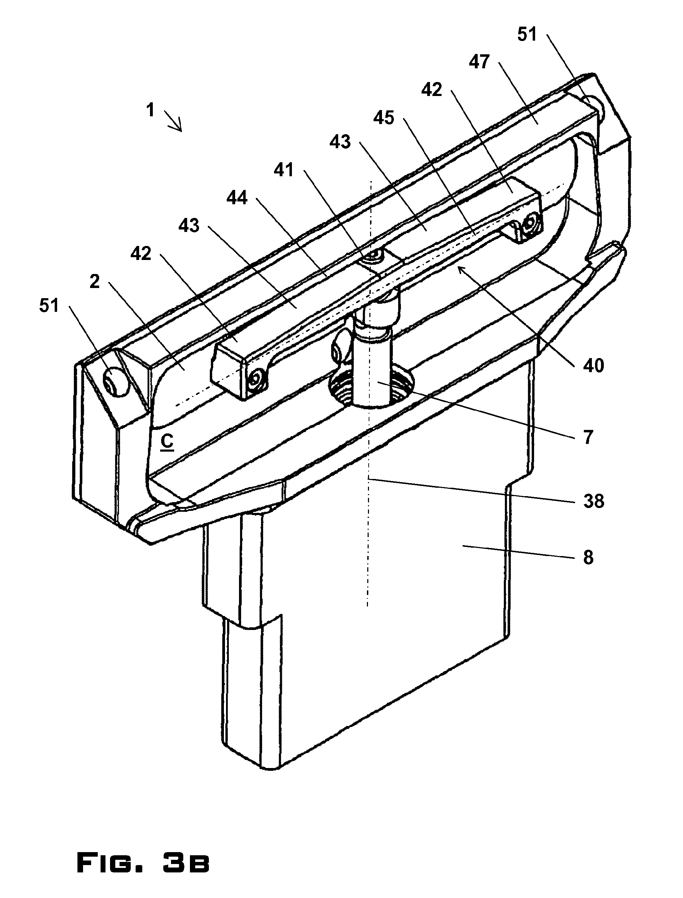

In den Figuren 3a und 3b sind in Form einer dritten Ausführungsform ein Verschlussglied 2 und ein Verstellarm 7 mit einem Querträger 40 dargestellt. Der sich quer zur Verstellachse 38 erstreckende Querträger 40 ist an einer mittleren Verbindungsstelle 41 mit dem Verstellarm 7 verbunden. Diese mittlere Verbindungsstelle 41 weist eine Schraube 9a auf, die durch eine Zylindersenkung 28a und ein Durchgangsloch 20 des Querträgers 40 hindurchgeführt ist und in ein in einem Sackloch 36 ausgeformten Gewinde im Verstellarm 7 eingreift. Somit bilden der Querträger 40 abstrakt ein erstes Bauteil 10 und der Verstellarm 7 abstrakt ein zweites Bauteil 11.

Der Querträger 40 ist auf der Rückseite 39 des Verschlussgliedes 2, die der Verschlussfläche 3 gegenüberliegt, an zwei beidseitig zu der mittleren Verbindungsstelle 41 liegenden seitlichen Verbindungsstellen 42 mit dem Verschlussglied 2 verbunden. Diese seitlichen Verbindungsstellen 42 weisen jeweils eine Schraube 9a auf, die jeweils durch ein in dem Querträger 40 ausgeformtes Durchgangsloch 20 mit Zylindersenkung 28a hindurchgeführt ist und in ein auf der Rückseite 39 des Verschlussgliedes 2 ausgeformtes Gewinde in einem Sackloch 36 eingreift. Somit bildet der Querträger 40 abstrakt ein erstes Bauteil 10 und das Verschlussglied 2 abstrakt ein zweites Bauteil 11.

In einem mittleren Abschnitt 43, der die mittlere Verbindungsstelle 41 und beidseitig an diese anschliessende Abschnitte umfasst und der sich zwischen den seitlichen Verbindungsstellen 42 erstreckt, weist der Querträger 40 einen Abstand 44 von der Rückseite 39 auf, wie in Figur 3b gezeigt. In anderen Worten ist der Querträger 40 in dem mittleren Abschnitt 43 beanstandet zur Rückseite 39 angeordnet und berührt das Verschlussglied 2 in diesem Bereich nicht. In anderen Worten überspannt der Querträger 40 die Rückseite 39 des Verschlussgliedes 2 und liegt ausschliesslich im Bereich der seitlichen Verbindungsstellen 42 auf der Rückseite 39 des Verschlussgliedes 2 auf.

Der einstückig aus Metall ausgebildete Querträger 40 ist derart elastisch ausgebildet, dass das Verschlussglied 2 durch eine Verwindung des Querträgers 40 relativ zu dem Verstellarm 7 um eine rechtwinklig zu der Verstellachse 38 stehende Schwenkachse 45, die parallel zu der Öffnung 4 und dem Ventilsitz 46 verläuft, verschwenkbar ist, wie in der Figur 3b dargestellt.

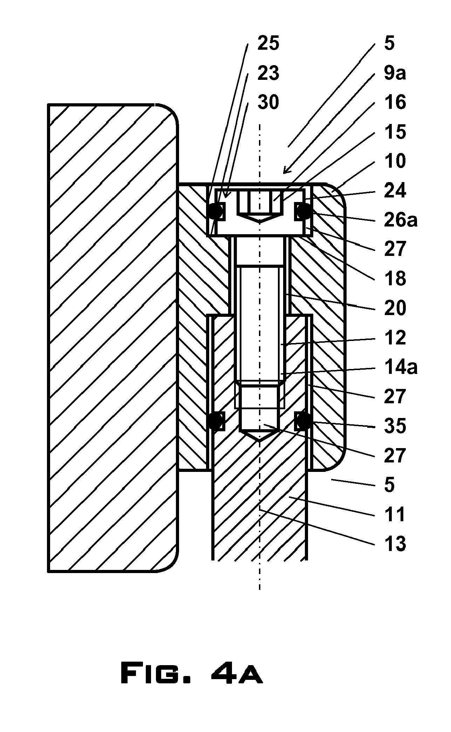

Das Vakuumventil 1 weist zudem zwei Ventilbefestigungslöcher 51 in der Wand 47 auf, mittels welcher die mit dem Gehäuse der Antriebseinheit 8 gekoppelte Wand 47 an einer Komponente, insbesondere an einer Vakuumkammer, montiert werden kann. Auch diese Befestigung kann mittels einer erfindungsgemässen Schraubverbindung erfolgen, wobei die Wand 47 mit dem jeweiligen Ventilbefestigungsloch 51 abstrakt das erste Bauteil 10 und die Komponente das zweite Bauteil 11 bildet. In den Figuren 1a, 1b, 1c, 2, 3a und 3b werden somit mehrere unterschiedliche Schraubverbindungen beschrieben, die sich vor allem dadurch unterscheiden, dass das abstrakte erste Bauteil 10 und das abstrakte zweite Bauteil 11 jeweils von unterschiedlichen Teilen gebildet werden. In den Figuren 4a bis 9b werden diese Bauteile daher abstrakt als erstes Bauteil 10 und als zweites Bauteil 11 bezeichnet, wobei diese Bauteile von unterschiedlichen Teilen, insbesondere des Vakuumventils 1, gebildet werden können. Im Folgenden werden die unterschiedlichen Ausführungsformen dieser erfindungsgemässen Schraubverbindungen detailliert beschrieben.

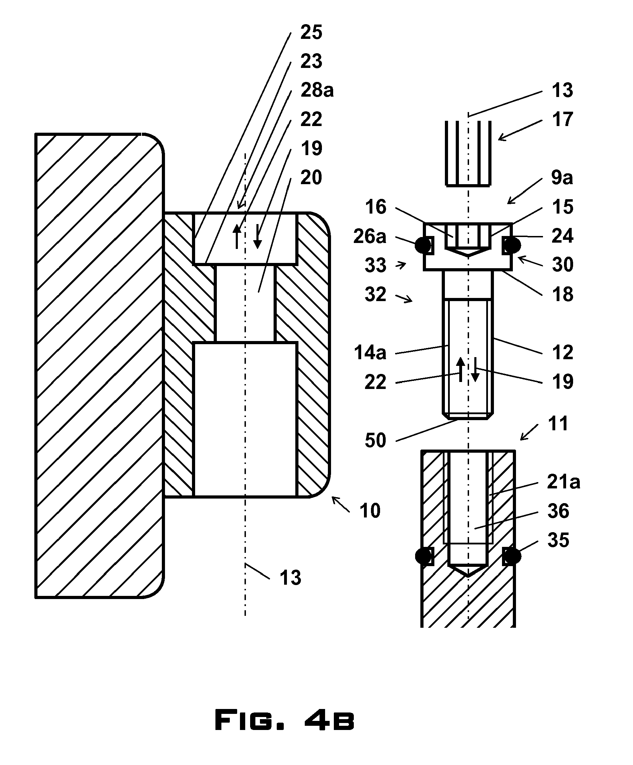

In den Figuren 4a und 4b sind das erste Bauteil 10, insbesondere in Form des Verschlussgliedes 2, das zweite Bauteil 11, insbesondere in Form des Verstellarms 7, und die Schraube 9a dargestellt.

Die Schraube 9a setzt sich aus einem Gewindeabschnitt 32 und einem Schraubenkopf 33 zusammen und hat einen Eingriffs-Oberflächenabschnitt 15, einen Dichtungs-Oberflächenabschnitt 24, einen Kraftübertragungs-Oberflächenabschnitt 18, einen Gewinde-Oberflächenabschnitt 12 und einen Stirn-Oberflächenabschnitt 50. Der Schraubenkopf 33 ist ein Zylinderschraubenkopf.

Der Eingriffs-Oberflächenabschnitt 15, der Kraftübertragungs-Oberflächenabschnitt 18 und der Dichtungs-Oberflächenabschnitt 24 sind auf dem Schraubenkopf 33 angeordnet.

Auf dem Gewinde-Oberflächenabschnitt 12 ist ein sich um eine geometrische erste Achse 13 erstreckendes erstes Gewinde 14a ausgeformt. Das Gewinde ist ein erstes Aussengewinde 14a.

Auf dem Eingriffs-Oberflächenabschnitt 15 ist ein derartig ausgebildeter Eingriff 16 in Form eines Innensechskants ausgeformt, dass die Schraube 19a um die erste Achse 13 mittels eines formschlüssig in den Eingriff eingreifbaren Werkzeugs 17, nämlich einem Aussensechskant, verdrehbar ist.

Der sich radial zur ersten Achse 13 erstreckende Kraftübertragungs-Oberflächenabschnitt 18 ist zwischen dem Gewinde-Oberflächenabschnitt 12 und dem Eingriffs-Oberflächenabschnitt 15 angeordnet und weist in eine sich entlang der ersten Achse 13 erstreckende Schraub-Schliessrichtung 19.

Das erste Bauteil 10 hat ein sich entlang der ersten Achse 13 erstreckendes zylinderförmiges Durchgangsloch 20. In dem zweiten Bauteil 11 ist ein zweites Gewinde in Form eines zweiten Innengewindes 21a ausgebildet. Dieses zweite Gewinde 21a ist in einem Sackloch 36 im zweiten Bauteil 11 ausgeformt.

Wie in Figur 4a gezeigt sind das erste Bauteil 10 und das zweite Bauteil 11 durch einen durch das Durchgangsloch 20 erfolgenden Gewindeeingriff zwischen dem ersten Aussengewinde 14a des ersten Bauteils 10 und dem zweiten Innengewinde 21a des zweiten Bauteils 11 formschlüssig mechanisch gekoppelt. Der Gewinde-Oberflächenabschnitt 12 ist auf dem durch das Durchgangsloch 20 hindurch geführten Gewindeabschnitt 32 angeordnet. Der Kraftübertragungs-Oberflächenabschnitt 18 liegt hierbei auf einer Auflagefläche 23 des ersten Bauteils 10 auf. Diese sich radial zur ersten Achse 13 erstreckende Auflagefläche 23 umgibt das Durchgangsloch 20 und weist in eine der Schraub-Schliessrichtung 19 entgegen gesetzte Schraub-Öffnungsrichtung 22.

Wie in Figur 4a gezeigt ist der Eingriffs-Oberflächenabschnitt 15 der Schraube 9a in dem ersten Gasbereich 5 angeordnet.

Der Dichtungs-Oberflächenabschnitt 24, der die erste Achse 13, umschliesst, ist zwischen dem Kraftübertragungs-Oberflächenabschnitt 18 und dem Eingriffs-Oberflächenabschnitt 15 angeordnet und trennt diesen Kraftübertragungs-Oberflächenabschnitt 18 und den Eingriffs-Oberflächenabschnitt 15 voneinander.

Der Schraubenkopf 33 der Schraube 9a hat eine nach aussen weisende, den Dichtungs-Oberflächenabschnitt 24 bildende Aussenmantelfläche 24, welche die geometrische Form einer geometrischen geraden Kreiszylindermantelfläche hat. Die Innenmantelfläche 25 und die Aussenmantelfläche 24 haben die gemeinsame geometrische erste Achse 13.

Der Stirn-Oberflächenabschnitt 50 liegt dem Eingriffs-Oberflächenabschnitt 15 gegenüber und weist in die Schraub-Schliessrichtung 19, wobei der Gewinde-Oberflächenabschnitt 12 zwischen dem Stirn-Oberflächenabschnitt 50 und dem Kraftübertragungs-Oberflächenabschnitt 18 angeordnet ist.

Benachbart zu der Auflagefläche 23 befindet sich eine Dichtungsfläche 25, die das Durchgangsloch 20 umschliesst. Die Dichtungsfläche 25 wird von einer Innenmantelfläche gebildet, die nach innen auf die erste Achse 13 weist. Diese Innenmantelfläche 25 hat die geometrische Form einer geometrischen geraden Kreiszylindermantelfläche, die von einer axial zu dem Durchgangsloch 20 benachbart angeordneten und um die erste Achse 13 verlaufenden Zylindersenkung 28a im ersten Bauteil 10 gebildet wird. Den Boden dieser Zylindersenkung 28a bildet die Auflagefläche 23.

Zwischen dem Dichtungs-Oberflächenabschnitt 24 der Schraube 9a und der Dichtungsfläche 25 des ersten Bauteils 10 ist ein dichtendes Dichtungselement 26a angeordnet. Das Dichtungselement 26a ist auf dem Dichtungs-Oberflächenabschnitt 24 der Schraube 9a fixiert und ist als ein O-Ring 26a ausgebildet. Zur Fixierung dieses O-Rings 26a besitzt der Dichtungs-Oberflächenabschnitt 24 eine Umfangsnut 30. Dieser O-Ring 26a umschliesst die erste Achse 13 und ist derart angeordnet, dass der erste Gasbereich 5 von einem dritten Gasbereich 27, in dem der Gewinde-Oberflächenabschnitt 12, der Kraftübertragungs-Oberflächenabschnitt 18 und der Stirn-Oberflächenabschnitt 50 angeordnet sind, getrennt ist, wie in Figur 4a gezeigt.

Ein als zweiter O-Ring ausgebildetes gas- oder partikeldichtendes zweites Dichtungselement 35, das dichtend zwischen dem ersten Bauteil 10 und dem zweiten Bauteil 11 angeordnet ist, trennt den ersten Gasbereich 5 und den dritte Gasbereich 27 gas- oder partikeldicht und umschliesst das Durchgangsloch 20.

Dieser dritte Gasbereich 27, in dem der Gewinde-Oberflächenabschnitt 12, der Kraftübertragungs-Oberflächenabschnitt 18 und der Stirn-Oberflächenabschnitt 50 angeordnet sind, ist somit innerhalb des ersten Gasbereichs 5 und von diesem mittels des O-Rings 26a und des zweiten O-Rings 35 gasdicht oder partikeldicht getrennt angeordnet und wird vom dem ersten Gasbereich 5 vollständig umschlossen.

Das Dichtungselement 26a und das zweite Dichtungselement 35 können gasdicht ausgebildet sein, wobei das Dichtungselement 26a und das zweite Dichtungselement 35 derart angeordnet sind, dass der erste Gasbereich 5 von dem dritten Gasbereich 27 gasdicht getrennt ist. Ein geeignetes Dichtungsmaterial ist beispielsweise Elastomer, insbesondere Kautschuk, insbesondere Fluorkautschuk oder Perfluorkautschuk. Im Falle einer gasdichten Trennung zwischen dem drittem Gasbereich 27 und dem ersten Gasbereich 5 werden Mikropartikel, die im dritten Gasbereich 27 insbesondere durch Reibung an den Kotaktstellen entstehen, in diesem dritten Gasbereich 27 gehalten und können nicht in den ersten Gasbereich 5 vordringen, wodurch letzterer frei von allfällig prozessschädigenden Mikropartikeln gehalten wird.

Alternativ ist zumindest eines der Dichtungselemente 26a oder 35 derart partikeldichtend ausgebildet, dass in dem dritten Gasbereich 27 befindliche Mikropartikel mit einer Partikelgrösse von mehr als 1 oder 0,1 oder 0,01 Mikrometer von dem Dichtungselement 26a oder 35 im Wesentlichen blockiert und an einem Eindringen in den ersten Gasbereich 5 im Wesentlichen gehindert werden. Beispielsweise ist das Dichtungselement 26a oder 35 als Filter, insbesondere als Schwebstofffilter, zur Ausfilterung von Partikeln mit einer Partikelgrösse von mehr als 1 oder 0,1 oder 0,01 Mikrometer, insbesondere mit einem Abscheidegrad von über 85% oder 95% oder 99% oder 99,5% oder 99,95%, ausgebildet. Insbesondere besteht das Dichtungselement 26a oder 35 aus einem Fasermaterial oder einem insbesondere gesinterten oder gewebten metallischen Werkstoff.

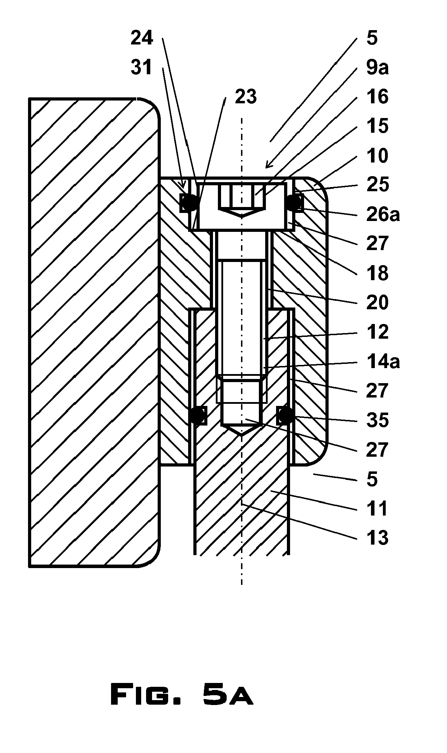

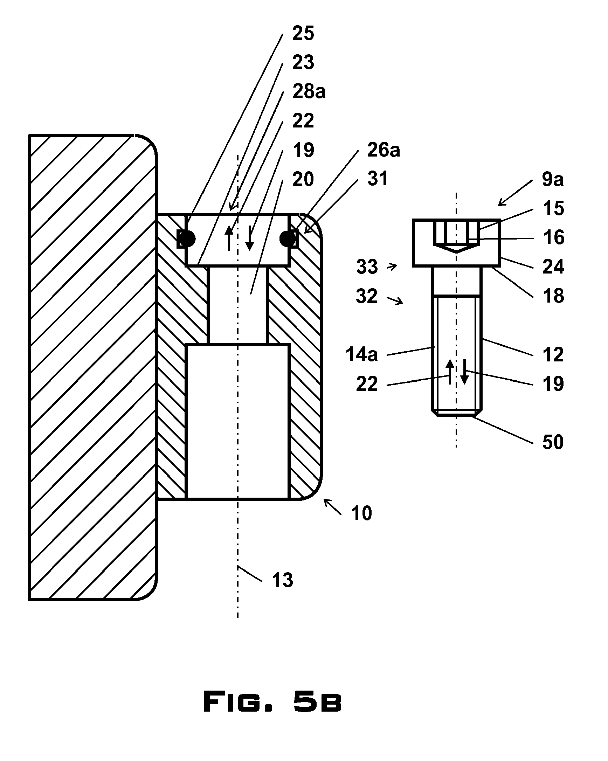

Bei der in den Figuren 5a und 5b gezeigten fünften Ausführungsform ist das Dichtungselement 26a nicht wie im Falle des vierten Ausführungsform in einer Umfangsnut 30 auf dem Dichtungs-Oberflächenabschnitt 24 der Schraube 9a fixiert, sondern in der runden Kegelsenkung 28a auf der Dichtungsfläche 25 des ersten Bauteils 10. Das Dichtungselement in Form eines O-Rings 26a wird in einer Umfangsnut 31 der als zylindrische Innenmantelfläche ausgeformten Dichtungsfläche 25 gehalten. Der Dichtungs-Oberflächenabschnitt 24 ist in diesem Falle eine glatte zylindrische Aussenmantelfläche. Ein Vorteil dieser Ausführungsform besteht darin, dass eine konventionelle Schraube 9a mit gegebenenfalls bearbeiteter zylindrischer Aussenmantelfläche eingesetzt werden kann.

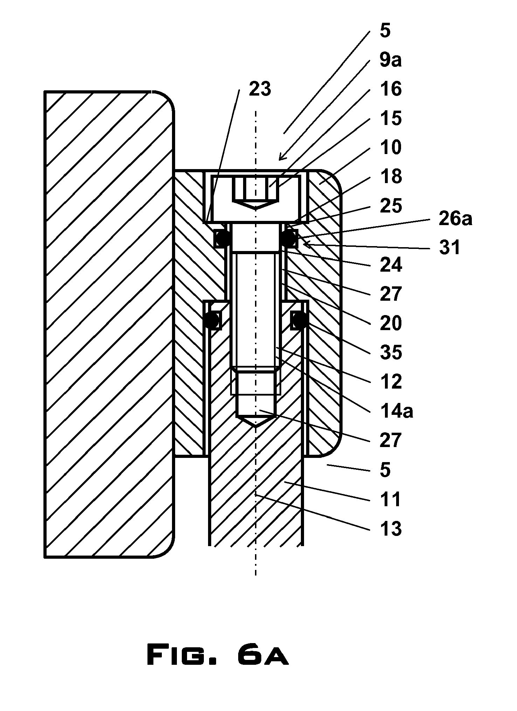

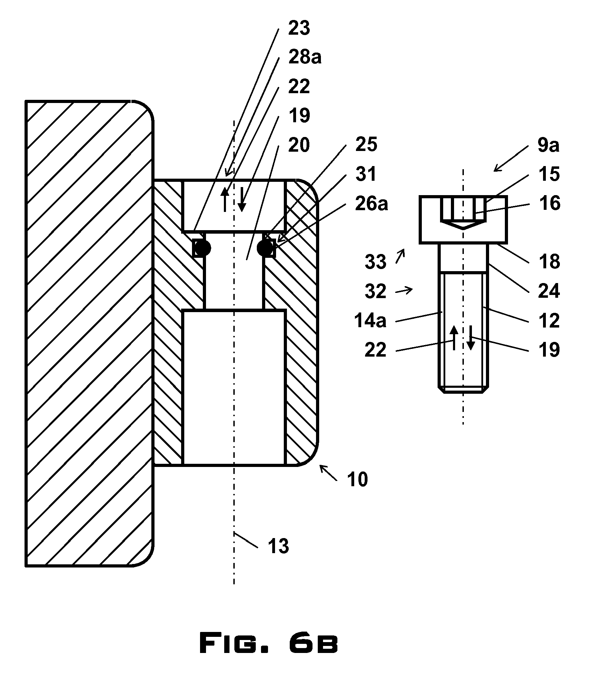

Im Falle des in den Figuren 6a und 6b dargestellten sechsten Ausführungsbeispiels befindet sich der Dichtungs-Oberflächenabschnitt 24 der Schraube 9a nicht wie bei der vierten oder fünften Ausführungsform auf dem Schraubenkopf 33, sondern auf einem gewindefreien zylindrischen glatten Teil des Gewindeabschnitts 32. Der Dichtungs-Oberflächenabschnitt 24 ist in diesem Falle eine glatte zylindrische Aussenmantelfläche auf dem Gewindeabschnitt 32. In anderen Worten liegt der Dichtungs-Oberflächenabschnitt 24 zwischen dem Gewinde-Oberflächenabschnitt 12 und dem Kraftübertragungs-Oberflächenabschnitt 18. Auch das Dichtungselement 26a liegt nicht wie im Falle des fünften Ausführungsform in der runden Kegelsenkung 28a des ersten Bauteils 10, sondern in einem Abschnitt des Durchgangsloches 20, welcher den glatten Teil des Gewindeabschnitt 32 umgibt. Das Dichtungselement in Form eines O-Rings 26a wird in einer Umfangsnut 31 der als zylindrische Innenmantelfläche ausgeformten Dichtungsfläche 25 innerhalb dieses Abschnitts des Durchgangslochs 20 gehalten.

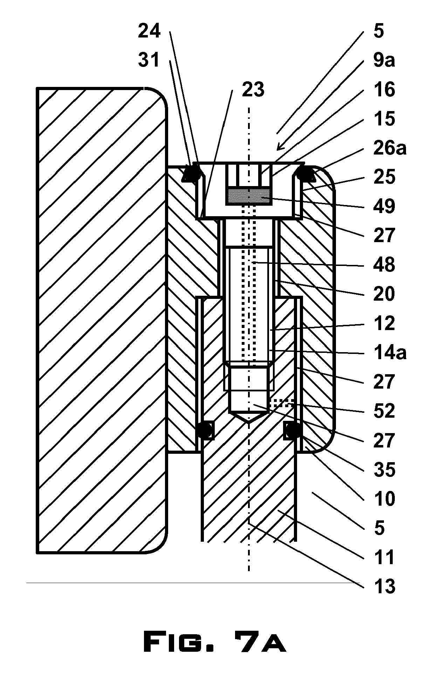

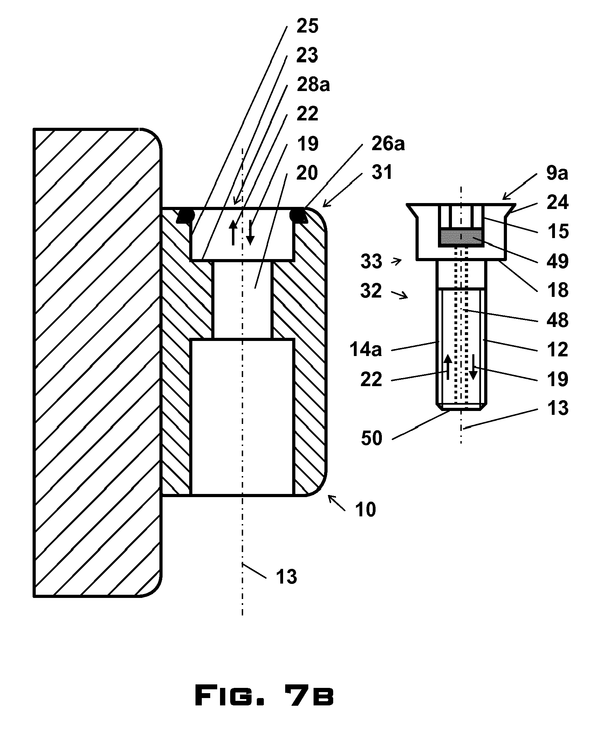

Bei dem siebten Ausführungsbeispiel, welches in den Figuren 7a und 7b gezeigt wird, hat die Schraube 9a eine im oberen Abschnitt des Schraubenkopfes 33 in Form einer Wulst teilweise nach aussen weisende, den Dichtungs-Oberflächenabschnitt 24 bildende Aussenmantelfläche, welche die geometrische Form einer geometrischen geraden Kreiskegelmantelfläche hat. Das als O-Rings ausgebildetes Dichtungselement 26a ist auf der Dichtungsfläche 25 in der runden Zylindersenkung 28a des ersten Bauteils 10 fixiert, wobei der O-Ring 26a in einer Umfangsnut 31 der Dichtungsfläche 25 gehalten wird.

Die Schraube 9a des siebten Ausführungsbeispiels hat den Gewinde-Oberflächenabschnitt 12, auf welchem das sich um die geometrische erste Achse 13 erstreckende erste Gewinde in Form des ersten Aussengewindes 14a ausgeformt ist. Auf dem Eingriffs-Oberflächenabschnitt 15 ist der derartig ausgebildete Eingriff 16 ausgeformt, dass die Schraube 9a um die erste Achse 13 mittels des formschlüssig in den Eingriff eingreifbaren Werkzeugs 17 verdrehbar ist. Der Kraftübertragungs-Oberflächenabschnitt 18 ist zwischen dem Gewinde-Oberflächenabschnitt 12 und dem Eingriffs-Oberflächenabschnitt 15 angeordnet und weist in die sich entlang der ersten Achse erstreckende Schraub-Schliessrichtung 19. Der Stirn-Oberflächenabschnitt 50 liegt dem Eingriffs-Oberflächenabschnitt 15 gegenüber und weist der in die Schraub-Schliessrichtung 19. Der Gewinde-Oberflächenabschnitt 12 ist zwischen dem Stirn-Oberflächenabschnitt 50 und dem Kraftübertragungs-Oberflächenabschnitt 18 angeordnet. Die Schraube 9a hat den Dichtungs-Oberflächenabschnitt 24, der zwischen dem Gewinde-Oberflächenabschnitt 12 und dem Eingriffs-Oberflächenabschnitt 15 angeordnet ist, der den Gewinde-Oberflächenabschnitt 12 und den Eingriffs-Oberflächenabschnitt 15 voneinander trennt und der die erste Achse 13 umschliesst.

Zwischen dem Eingriffs-Oberflächenabschnitt 15 und dem Stirn-Oberflächenabschnitt 50 ist eine Verbindungsöffnung 48 in Form eines sich entlang der ersten Achse 13 erstreckenden, insbesondere zylindrischen Kanals ausgeformt. In der Verbindungsöffnung 48 ist ein Filterelement 49 angeordnet. Dieses Filterelement 49 ist in dem Eingriffs-Oberflächenabschnitt 15 und dem Eingriff 16 am schraubenkopfseitigen Ende der Verbindungsöffnung 48 fixiert.

Mittels dieser Verbindungsöffnung 48 in der Schraube 9a werden der erste Gasbereich 5 und der dritte Gasbereich 27 partikeldicht, aber gasdurchlässig miteinander verbunden, wie in der Figur 7a gezeigt.

Das Filterelement 49 ist zur Ausfilterung von Partikeln mit einer Partikelgrösse von mehr als 1 oder 0,1 oder 0,01 Mikrometer, insbesondere mit einem Abscheidegrad von über 85% oder 95% oder 99% oder 99,5% oder 99,95%, insbesondere in Form eines Schwebstofffilters, ausgebildet. Beispielsweise besteht das Filterelement 49 aus einem Fasermaterial oder einem insbesondere gesinterten oder gewebten metallischen Werkstoff.

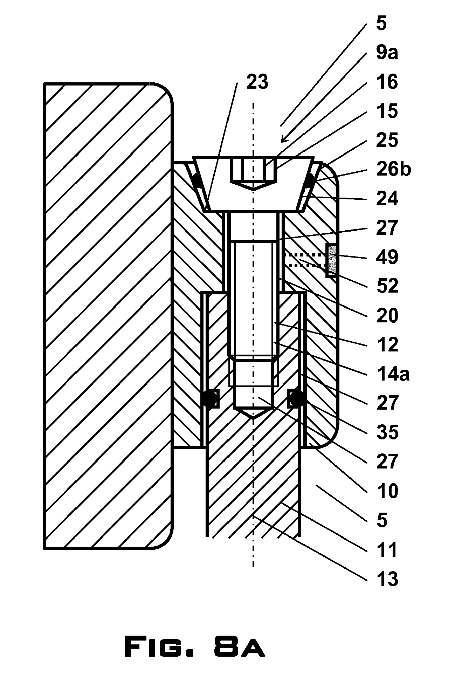

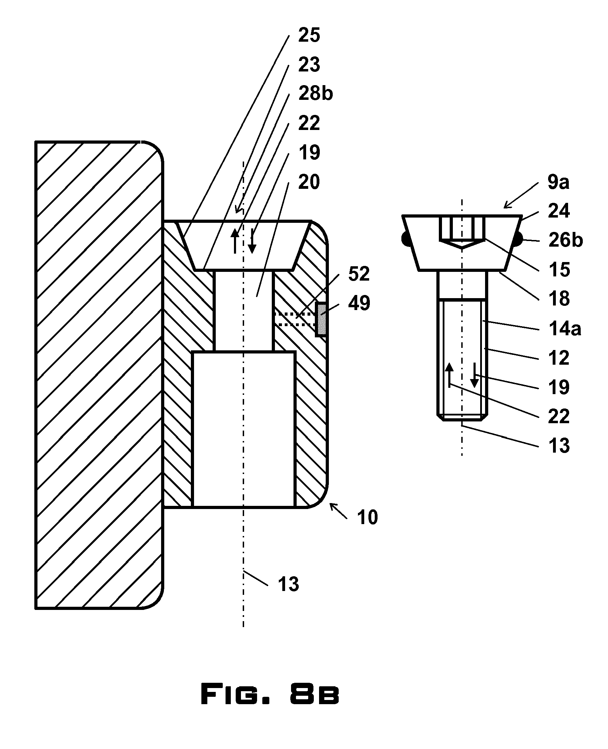

In den Figuren 8a und 8b wird eine Variante der in den Figuren 4a und 4b gezeigten vierten Ausführungsform in Form einer achten Ausführungsform dargestellt. Die Schraube 9a hat eine nach aussen weisende, den Dichtungs-Oberflächenabschnitt 24 bildende Aussenmantelfläche, welche die geometrische Form einer geometrischen geraden Kreiskegelmantelfläche hat. Auch die Innenmantelfläche 25 des ersten Bauteils 10 hat die geometrische Form einer geometrischen geraden Kreiskegelmantelfläche und wird von einer axial zu dem Durchgangsloch 20 benachbart angeordneten und um die erste Achse 13 verlaufenden Kegelsenkung 28b im ersten Bauteil 10 gebildet. Auf der kegelförmigen Aussenmantelfläche 24 der Schraube 9a ist das Dichtungselement in Form einer gasdichten vulkanisierten Dichtung 26b aufvulkanisiert.

Der erste Gasbereich 5 und der dritte Gasbereich 27 sind über eine im ersten Bauteil 10 ausgeformte Verbindungsöffnung 52 miteinander verbunden. Diese Verbindungsöffnung 52 erstreckt sich radial zum Durchgangsloch 49, wie in den Figuren 8a und 8b gezeigt. An der Verbindungsöffnung 52 ist ein Filterelement 49 angeordnet. Wie auch im Falle der siebten Ausführungsform ist das Filterelement 49 derart partikeldichtend ausgebildet, dass in dem dritten Gasbereich 27 befindliche Mikropartikel von dem Filterelement 49 im Wesentlichen blockiert und an einem Eindringen in den ersten Gasbereich 5 im Wesentlichen gehindert werden.

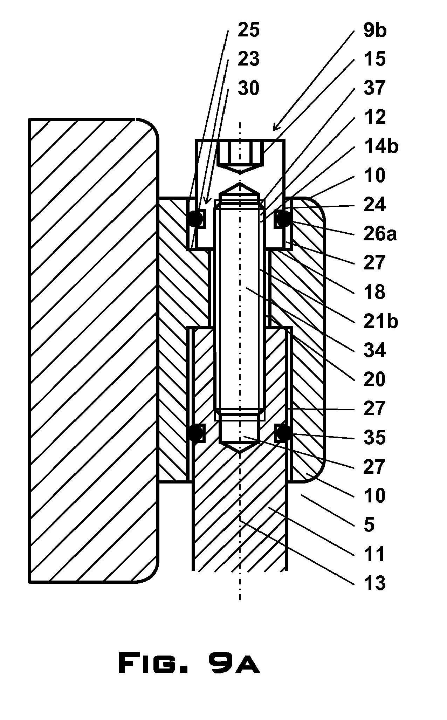

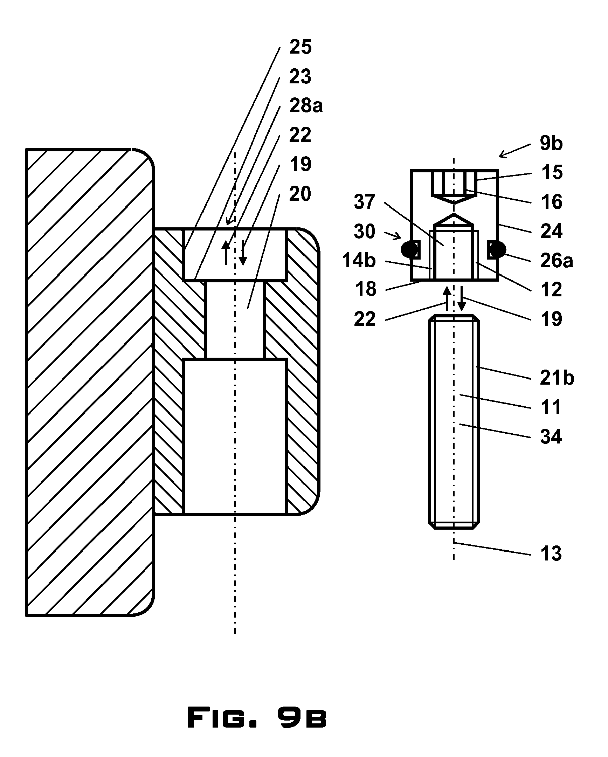

Während bei den vorangegangenen Ausführungsformen das Schraubelement stets als Schraube 9a ausgebildet war, wird das Schraubelement in der neunten Ausführungsform in den Figuren 9a und 9b von einer Mutter 9b gebildet.

Das zweite Gewinde 21b des zweiten Bauteils 11 ist in diesem Falle auf einem durch das Durchgangsloch 20 hindurch geführten Gewindebolzen 34, der dem zweiten Bauteil 11 zugeordnet ist, ausgeformt.

Das erste Gewinde des Schraubelements 9b ist als erstes Innengewinde 14b und das zweite Gewinde des Gewindebolzens 34 des zweiten Bauteils 11 als zweites Aussengewinde 21b ausgebildet.

Das erste Innengewinde 14b ist in einem Sackloch 37 in der Mutter 9b ausgeformt, wobei die Mutter als Hutmutter 9b ausgebildet ist, wie in den Figuren 9a und 9b dargestellt.

Das erste Bauteil 10 hat eine nach innen auf die erste Achse 13 weisende, die Dichtungsfläche 25 bildende Innenmantelfläche. Diese Innenmantelfläche 25 hat die geometrische Form einer geometrischen geraden Kreiszylindermantelfläche, die von einer axial zu dem Durchgangsloch 20 benachbart angeordneten und um die erste Achse 13 verlaufenden Zylindersenkung 28a im ersten Bauteil 10 gebildet wird.

Die Hutmutter 9b hat eine nach aussen weisende, den Dichtungs-Oberflächenabschnitt 24 bildende Aussenmantelfläche, welche die geometrische Form einer geometrischen geraden Kreiszylindermantelfläche hat. Das Dichtungselement 26a ist auf der Aussenmantelfläche 24 des der Hutmutter 9b fixiert. Dieses Dichtungselement ist als ein O-Ring 26a ausgebildet. Die Aussenmantelfläche 24 hat eine Umfangsnut 30, in welcher der O-Ring 26a fixiert ist.

Die Ausführungsformen ermöglichen eine drastische Reduzierung der Anzahl an Mikropartikeln im ersten Gasbereich, wodurch die Prozesssicherheit bei Vakuumanwendungen, für welche die erfindungsgemässen Vakuumventile zum Einsatz kommen, erheblich gesteigert werden kann.

## Patentansprüche

1. Vakuumventil (1) mit
• einem Verschlussglied (2), das eine Verschlussfläche (3) zum gasdichten Verschliessen einer Öffnung (4), die einen ersten Gasbereich (5) mit einem zweiten Gasbereich (6) verbindet, aufweist,
• einem Verstellarm (7), an welchem das Verschlussglied (2) angeordnet ist,
• einer Antriebseinheit (8), die mit dem Verstellarm (7) mechanisch gekoppelt ist und die derart ausgebildet ist, dass das Verschlussglied (2) in dem ersten Gasbereich (5) durch Verstellen des Verstellarms (7) mittels der Antriebseinheit (8) zwischen
- einer Offenposition (O), in welcher das Verschlussglied (2) die Öffnung (4) freigibt, und
- einer Geschlossenposition (C), in welcher die Verschlussfläche (3) die Öffnung (4) gasdicht verschliesst und den ersten Gasbereich (5) von dem zweiten Gasbereich (6) gasdicht trennt,
und zurück verstellbar ist, und
• einem Schraubelement (9a; 9b) zur mechanisch koppelnden Verbindung eines zumindest teilweise in dem ersten Gasbereich (5) angeordneten ersten Bauteils (10) des Vakuumventils (1) mit einem zweiten Bauteil (11), wobei das erste Bauteil (10) oder das zweite Bauteil (11) mit der Antriebseinheit (8) mechanisch gekoppelt ist, wobei
• das Schraubelement (9a; 9b)
- einen Gewinde-Oberflächenabschnitt (12), auf welchem ein sich um eine geometrische erste Achse (13) erstreckendes erstes Gewinde (14a; 14b) ausgeformt ist,
- einen Eingriffs-Oberflächenabschnitt (15), auf welchem ein derartig ausgebildeter Eingriff (16) ausgeformt ist, dass das Schraubelement (9a; 9b) um die erste Achse (13), insbesondere mittels eines formschlüssig in den Eingriff eingreifbaren Werkzeugs (17), verdrehbar und/oder formschlüssig verdrehgesichert ist, und
- einen Kraftübertragungs-Oberflächenabschnitt (18), der zwischen dem Gewinde-Oberflächenabschnitt (12) und dem Eingriffs-Oberflächenabschnitt (15) angeordnet ist und der zumindest teilweise in eine sich entlang der ersten Achse (13) erstreckende Schraub-Schliessrichtung (19) weist,
aufweist,
• das erste Bauteil (10) ein sich entlang der ersten Achse (13) erstreckendes Durchgangsloch (20) aufweist,
• das erste Bauteil (10) und das zweite Bauteil (11) durch
- einen durch das Durchgangsloch (20) erfolgenden Gewindeeingriff zwischen dem ersten Gewinde (14a; 14b) des Schraubelements (9a; 9b) und einem dem zweiten Bauteil (11) zugeordneten zweiten Gewinde (21a; 21b) und
- Aufliegen des Kraftübertragungs-Oberflächenabschnitts (18) auf einer das Durchgangsloch (20) umgebenden und zumindest teilweise in eine der Schraub-Schliessrichtung (19) entgegen gesetzten Schraub-Öffnungsrichtung (22) weisenden Auflagefläche (23) des ersten Bauteils (10),
formschlüssig mechanisch koppelbar sind und
• der Eingriffs-Oberflächenabschnitt (15) des Schraubelements (9a; 9b) in dem ersten Gasbereich (5) angeordnet ist,
**dadurch gekennzeichnet, dass**
• das Schraubelement (9a; 9b) einen Dichtungs-Oberflächenabschnitt (24),
- der zwischen dem Gewinde-Oberflächenabschnitt (12) und dem Eingriffs-Oberflächenabschnitt (15) angeordnet ist,
- der den Gewinde-Oberflächenabschnitt (12) und den Eingriffs-Oberflächenabschnitt (15) voneinander trennt und
- der die erste Achse (13) umschliesst,
aufweist,
• das erste Bauteil (10) benachbart zu der Auflagefläche (23) eine das Durchgangsloch (20) umschliessende Dichtungsfläche (25) aufweist und
• ein die erste Achse (13) umschliessendes, dichtendes Dichtungselement (26a; 26b) zwischen dem Dichtungs-Oberflächenabschnitt (24) des Schraubelements (9a; 9b) und der Dichtungsfläche (25) des ersten Bauteils (10) derart angeordnet ist, dass der erste Gasbereich (5) von einem dritten Gasbereich (27), in dem der Gewinde-Oberflächenabschnitt (12) angeordnet ist, getrennt ist.

2. Vakuumventil (1) nach Anspruch 1,
**dadurch gekennzeichnet, dass**
der Dichtungs-Oberflächenabschnitt (24) zwischen dem Kraftübertragungs-Oberflächenabschnitt (18) und dem Eingriffs-Oberflächenabschnitt (15) derart angeordnet ist, dass der Kraftübertragungs-Oberflächenabschnitt (18) in dem dritten Gasbereich (27) ist.

3. Vakuumventil (1) nach Anspruch 1 oder 2,
**dadurch gekennzeichnet, dass**
• das erste Bauteil (10) eine zumindest teilweise nach innen auf die erste Achse (13) weisende, die Dichtungsfläche (25) bildende Innenmantelfläche aufweist,
• das Schraubelement (9a; 9b) eine zumindest teilweise nach aussen weisende, den Dichtungs-Oberflächenabschnitt (24) bildende Aussenmantelfläche, die insbesondere die geometrische Form einer geometrischen geraden Kreiszylindermantelfläche oder einer geometrischen geraden Kreiskegelmantelfläche hat, aufweist und
• die Innenmantelfläche (25) und die Aussenmantelfläche (24) insbesondere die gemeinsame geometrische erste Achse (13) haben.

4. Vakuumventil (1) nach Anspruch 3,
**dadurch gekennzeichnet, dass**
die Innenmantelfläche (25) die geometrische Form
• einer geometrischen geraden Kreiszylindermantelfläche, die insbesondere von einer axial zu dem Durchgangsloch (20) benachbart angeordneten und um die erste Achse (13) verlaufenden Zylindersenkung (28a) im ersten Bauteil (10) gebildet wird, oder
• einer geometrischen geraden Kreiskegelmantelfläche, die insbesondere von einer axial zu dem Durchgangsloch (20) benachbart angeordneten und um die erste Achse (13) verlaufenden Kegelsenkung (28b) im ersten Bauteil (10) gebildet wird,
aufweist.

5. Vakuumventil (1) nach einem der Ansprüche 1 bis 4,
**dadurch gekennzeichnet, dass**
das Dichtungselement (26a; 26b) auf dem Dichtungs-Oberflächenabschnitt (24) des Schraubelements (9a; 9b) fixiert ist, insbesondere wobei
• das Dichtungselement als ein O-Ring (26a) ausgebildet ist und der Dichtungs-Oberflächenabschnitt (24) eine Umfangsnut (30) aufweist, in welcher der O-Ring (26a) fixiert ist, oder
• das Dichtungselement als aufvulkanisierte Dichtung (26b) ausgebildet ist und auf dem Dichtungs-Oberflächenabschnitt (24) aufvulkanisiert ist.

6. Vakuumventil (1) nach einem der Ansprüche 1 bis 4,
**dadurch gekennzeichnet, dass**
das Dichtungselement (26a; 26b) auf der Dichtungsfläche (25) des ersten Bauteils (10) fixiert ist, insbesondere wobei
• das Dichtungselement als ein O-Ring (26a) ausgebildet ist und die Dichtungsfläche (25) eine Umfangsnut (31) aufweist, in welcher der O-Ring (26a) fixiert ist, oder
• das Dichtungselement als aufvulkanisierte Dichtung (26b) ausgebildet ist und auf der Dichtungsfläche (25) aufvulkanisiert ist.

7. Vakuumventil (1) nach einem der Ansprüche 1 bis 6,
**dadurch gekennzeichnet, dass**
das Dichtungselement (26a; 26b)
• gasdichtend ist und
• zwischen dem Dichtungs-Oberflächenabschnitt (24) und der Dichtungsfläche (25) derart angeordnet ist, dass der erste Gasbereich (5) von dem dritten Gasbereich (27) gasdicht getrennt ist,
insbesondere wobei das Dichtungselement (26a; 26b) im Wesentlichen aus einem Elastomer, insbesondere Kautschuk, insbesondere Fluorkautschuk oder Perfluorkautschuk besteht.

8. Vakuumventil (1) nach einem der Ansprüche 1 bis 6,
**dadurch gekennzeichnet, dass**
das Dichtungselement (26a; 26b)
• derart partikeldichtend ausgebildet ist, dass in dem dritten Gasbereich (27) befindliche Mikropartikel mit einer Partikelgrösse von mehr als 1 oder 0,1 oder 0,01 Mikrometer von dem Dichtungselement (26a; 26b) im Wesentlichen blockiert und an einem Eindringen in den ersten Gasbereich (5) im Wesentlichen gehindert werden,
• insbesondere das Dichtungselement (26a; 26b) als Filter, insbesondere als Schwebstofffilter, zur Ausfilterung von Partikeln mit einer Partikelgrösse von mehr als 1 oder 0,1 oder 0,01 Mikrometer, insbesondere mit einem Abscheidegrad von über 85% oder 95% oder 99% oder 99,5% oder 99,95%, ausgebildet ist,
• insbesondere das Dichtungselement (26a; 26b) aus einem Fasermaterial oder einem insbesondere gesinterten oder gewebten metallischen Werkstoff besteht.

9. Vakuumventil (1) nach einem der Ansprüche 1 bis 8,
**dadurch gekennzeichnet, dass**
• der erste Gasbereich (5) und der dritte Gasbereich (27) über eine Verbindungsöffnung (48, 52) miteinander verbunden sind und
• in oder an der ersten Verbindungsöffnung (48, 52) ein Filterelement (49) angeordnet ist,
• das Filterelement (49) derart partikeldichtend ausgebildet ist, dass in dem dritten Gasbereich (27) befindliche Mikropartikel mit einer Partikelgrösse von mehr als 1 oder 0,1 oder 0,01 Mikrometer von dem Filterelement (49) im Wesentlichen blockiert und an einem Eindringen in den ersten Gasbereich (5) im Wesentlichen gehindert werden,
• insbesondere das Filterelement (49) zur Ausfilterung von Partikeln mit einer Partikelgrösse von mehr als 1 oder 0,1 oder 0,01 Mikrometer, insbesondere mit einem Abscheidegrad von über 85% oder 95% oder 99% oder 99,5% oder 99,95%, insbesondere in Form eines Schwebstofffilters, ausgebildet ist,
• insbesondere das Filterelement (49) aus einem Fasermaterial oder einem insbesondere gesinterten oder gewebten metallischen Werkstoff besteht.

10. Vakuumventil (1) nach Anspruch 9,
**dadurch gekennzeichnet, dass**
die Verbindungsöffnung (48) und das Filterelement (49) in dem Schraubelement (9a; 9b) angeordnet sind.

11. Vakuumventil (1) nach einem der Ansprüche 1 bis 10,
**dadurch gekennzeichnet, dass**
• das Schraubelement als Schraube (9a) mit einem Gewindeabschnitt (32) und einem Schraubenkopf (33) ausgebildet ist,
• der Gewinde-Oberflächenabschnitt (12) auf dem durch das Durchgangsloch (20) hindurch geführten Gewindeabschnitt (32) angeordnet ist,
• der Eingriffs-Oberflächenabschnitt (15), der Kraftübertragungs-Oberflächenabschnitt (18) und der Dichtungs-Oberflächenabschnitt (24) auf dem Schraubenkopf (33) angeordnet sind,
• insbesondere das erste Gewinde als erstes Aussengewinde (14a) und das zweite Gewinde als zweites Innengewinde (21a) ausgebildet ist,
• insbesondere das zweite Gewinde (21a) in einem Sackloch (36) im zweiten Bauteil (11) ausgeformt ist und
• insbesondere der Schraubenkopf (33) als Zylinderschraubenkopf ausgebildet ist.

12. Vakuumventil (1) nach einem der Ansprüche 1 bis 10, **dadurch gekennzeichnet, dass**
• das Schraubelement als Mutter (9b) ausgebildet ist,
• das zweite Gewinde (21b) auf einem durch das Durchgangsloch (20) hindurch geführten Gewindebolzen (34) des zweiten Bauteils (11) ausgeformt ist,
• insbesondere das erste Gewinde als erstes Innengewinde (14b) und das zweite Gewinde als zweites Aussengewinde (21b) ausgebildet ist,
• insbesondere das erste Gewinde (14b) in einem Sackloch (37) in der Mutter (9b) ausgeformt ist und
• insbesondere die Mutter als Hutmutter (9b) ausgebildet ist.

13. Vakuumventil (1) nach einem der Ansprüche 1 bis 12, **dadurch gekennzeichnet, dass**
der dritte Gasbereich (27), in dem der Gewinde-Oberflächenabschnitt (12) angeordnet ist,
• innerhalb des ersten Gasbereichs (5) und von diesem insbesondere gasdicht oder partikeldicht getrennt angeordnet ist und
• vom dem ersten Gasbereich (5) vollständig umschlossen ist.

14. Vakuumventil (1) nach einem der Ansprüche 1 bis 13, **gekennzeichnet durch**
ein insbesondere als zweiter O-Ringausgebildetes gas- oder partikeldichtendes zweites Dichtungselement (35),
• das dichtend zwischen dem ersten Bauteil (10) und dem zweiten Bauteil (11) angeordnet ist,
• den ersten Gasbereich (5) und den dritte Gasbereich (27) gas- oder partikeldicht trennt und
• insbesondere das Durchgangsloch (20) umschliesst.

15. Vakuumventil (1) nach einem der Ansprüche 1 bis 14, **dadurch gekennzeichnet, dass**
• das Verschlussglied (2) plattenförmig ist und das Vakuumventil (1) insbesondere als ein Transferventil ausgebildet ist,
• der Verstellarm (7) stangenförmig ist und sich entlang einer geometrischen Verstellachse (38) erstreckt und
• die Antriebseinheit (8) derart ausgebildet ist, dass das Verschlussglied (2) durch Verstellen des Verstellarms (7) in axiale Richtung parallel zu der Verstellachsen (38) mittels der Antriebseinheit (8) zwischen
- der Offenposition (O) und
- einer Zwischenposition (I), in welcher die Verschlussfläche (3) die Öffnung (4) überdeckt und sich in beabstandeter Gegenüberlage zu einem die Öffnung (4) umgebenden Ventilsitz (46) befindet, und in Richtung quer zu der Verstellachse (38) zwischen
- der Zwischenposition (I) und
- der Geschlossenposition (C),
verstellbar ist.

16. Vakuumventil (1) nach einem der Ansprüche 1 bis 15, **dadurch gekennzeichnet, dass**
• das erste Bauteil (10) von dem Verstellarm (7) und
• das zweite Bauteil (11) von dem Verschlussglied (2) oder
• das erste Bauteil (10) von dem Verschlussglied (2) und
• das zweite Bauteil (11) von dem Verstellarm (7) gebildet wird und
• der Verstellarm (7) und das Verschlussglied (2) mittels des Schraubelements (9a; 9b) verbunden sind.

17. Vakuumventil (1) nach Anspruch 15,
**dadurch gekennzeichnet, dass**
• ein sich quer zur Verstellachse (38) erstreckender Querträger (40) an einer mittleren Verbindungsstelle (41) mit dem Verstellarm (7) verbunden ist,
• der Querträger (40)
- auf einer der Verschlussfläche (3) gegenüberliegenden Rückseite (39) des Verschlussgliedes (2) an mindestens zwei beidseitig zu der mittleren Verbindungsstelle (41) liegenden seitlichen Verbindungsstellen (42) mit dem Verschlussglied (2) verbunden ist,
- in einem mittleren Abschnitt (43), der die mittlere Verbindungsstelle (41) und beidseitig an diese anschliessende Abschnitte umfasst und sich zwischen den seitlichen Verbindungsstellen (42) erstreckt, einen Abstand (44) von der Rückseite (39) aufweist,
- derart elastisch ausgebildet ist, dass durch eine Verwindung des Querträgers (40) das Verschlussglied (2) relativ zu dem Verstellarm (7) um eine rechtwinklig zu der Verstellachse (38) stehende Schwenkachse (45) verschwenkbar ist und
- insbesondere einstückig ausgebildet ist und
• die mittlere Verbindungsstelle (41) das Schraubelement (9a; 9b) aufweist und das erste Bauteil (10) von dem Verstellarm (7) und das zweite Bauteil (11) von dem Querträger (40) oder das erste Bauteil (10) von dem Querträger (40) und das zweite Bauteil (11) von dem Verstellarm (7) gebildet wird
und/oder
• die seitlichen Verbindungsstellen (42) jeweils das Schraubelement (9a; 9b) aufweisen und das erste Bauteil (10) von dem Verschlussglied (2) und das zweite Bauteil (11) von dem Querträger (40) oder das erste Bauteil (10) von dem Querträger (40) und das zweite Bauteil (11) von dem Verschlussglied (2) gebildet wird.

18. Vakuumventil (1) nach einem der Ansprüche 1 bis 15
**dadurch gekennzeichnet, dass**
• das erste Bauteil (10) von der Antriebseinheit (8) und das zweite Bauteil (11) von einer Wand (47), welche die Öffnung (4) aufweist, oder
• das erste Bauteil (10) von einer Wand (47), welche die Öffnung (4) aufweist, und das zweite Bauteil (11) von der Antriebseinheit (8)
gebildet wird.

19. Schraubelement, insbesondere Schraube (9a) oder Mutter (9b) für ein Vakuumventil (1) nach einem der Ansprüche 1 bis 18, mit
• einem Gewinde-Oberflächenabschnitt (12), auf welchem ein sich um eine geometrische erste Achse (13) erstreckendes erstes Gewinde (14a; 14b) ausgeformt ist,
• einem Eingriffs-Oberflächenabschnitt (15), auf welchem ein derartig ausgebildeter Eingriff (16) ausgeformt ist, dass das Schraubelement (9a; 9b) um die erste Achse (13), insbesondere mittels eines formschlüssig in den Eingriff eingreifbaren Werkzeugs (17), verdrehbar und/oder formschlüssig verdrehgesichert ist,
• einem Kraftübertragungs-Oberflächenabschnitt (18), der zwischen dem Gewinde-Oberflächenabschnitt (12) und dem Eingriffs-Oberflächenabschnitt (15) angeordnet ist und der zumindest teilweise in eine sich entlang der ersten Achse erstreckende Schraub-Schliessrichtung (19) weist,
• einem Stirn-Oberflächenabschnitt (50), der dem Eingriffs-Oberflächenabschnitt (15) gegenüberliegt und der zumindest teilweise in die Schraub-Schliessrichtung (19) weist, wobei der Gewinde-Oberflächenabschnitt (12) zwischen dem Stirn-Oberflächenabschnitt (50) und dem Kraftübertragungs-Oberflächenabschnitt (18) angeordnet ist,
**dadurch gekennzeichnet, dass**
• das Schraubelement (9a; 9b) einen Dichtungs-Oberflächenabschnitt (24),
- der zwischen dem Gewinde-Oberflächenabschnitt (12) und dem Eingriffs-Oberflächenabschnitt (15) angeordnet ist,
- der den Gewinde-Oberflächenabschnitt (12) und den Eingriffs-Oberflächenabschnitt (15) voneinander trennt und
- der die erste Achse (13) umschliesst,
aufweist,
• ein Dichtungselement (26a; 26b) auf dem Dichtungs-Oberflächenabschnitt (24) des Schraubelements (9a; 9b) fixiert ist, insbesondere wobei
- das Dichtungselement (26a; 26b) im Wesentlichen aus einem Elastomer, insbesondere Kautschuk, insbesondere Fluorkautschuk oder Perfluorkautschuk besteht, und/oder
- das Dichtungselement als ein O-Ring (26a) ausgebildet ist und der Dichtungs-Oberflächenabschnitt (24) eine Umfangsnut (30) aufweist, in welcher der O-Ring (26a) fixiert ist, oder
- das Dichtungselement als aufvulkanisierte Dichtung (26b) ausgebildet ist und auf dem Dichtungs-Oberflächenabschnitt (24) aufvulkanisiert ist,
• zwischen dem Eingriffs-Oberflächenabschnitt (15) und dem Stirn-Oberflächenabschnitt (50) eine Verbindungsöffnung (48) ausgeformt ist,
• in der Verbindungsöffnung (48) ein Filterelement (49) angeordnet ist,
• insbesondere das Filterelement (49) zur Ausfilterung von Partikeln mit einer Partikelgrösse von mehr als 1 oder 0,1 oder 0,01 Mikrometer, insbesondere mit einem Abscheidegrad von über 85% oder 95% oder 99% oder 99,5% oder 99,95%, insbesondere in Form eines Schwebstofffilters, ausgebildet ist,
• insbesondere das Filterelement (49) aus einem Fasermaterial oder einem insbesondere gesinterten oder gewebten metallischen Werkstoff besteht und
• insbesondere das Schraubelement (9a; 9b) eine zumindest teilweise nach aussen weisende, den Dichtungs-Oberflächenabschnitt (24) bildende Aussenmantelfläche, die insbesondere die geometrische Form
- einer geometrischen geraden Kreiszylindermantelfläche oder
- einer geometrischen geraden Kreiskegelmantelfläche hat,
aufweist.
